# EUROPEAN PATENT SPECIFICATION

(11) **EP 1 378 724 B1**
(45) Date of publication and mention of the grant of the patent: **29.03.2006**
(21) Application number: 03013940.6
(22) Date of filing: 20.06.2003
(51) Int. Cl.: G01C 21/36, G08G 1/0968

(54) **Route guidance system based on visual activity of the driver**
Zielführungssystem basiert auf visueller Tätigkeit des Fahrers
Système de guidage routier basé sur l'activité visuelle du conducteur

(30) Priority: 01.07.2002 JP 2002191961; 08.08.2002 JP 2002231492
(43) Date of publication of application: 07.01.2004
(73) Proprietor: Mazda Motor Corporation, Aki-gun Hiroshima-ken (JP)
(72) Inventor: Yamano, Yoko, Fuchu-cho, Aki-gun, Hiroshima-ken (JP); Kajikawa, Hiroko, Fuchu-cho, Aki-gun, Hiroshima-ken (JP); Okamoto, Yoshihisa, Fuchu-cho, Aki-gun, Hiroshima-ken (JP)
(74) Representative: Zinnecker, Armin

(56) References cited:
- DE-A- 10 037 573
- PATENT ABSTRACTS OF JAPAN vol. 1998, no. 11, 30 September 1998 (1998-09-30) & JP 10 160503 A (CANON INC), 19 June 1998 (1998-06-19)
- PATENT ABSTRACTS OF JAPAN vol. 2000, no. 24, 11 May 2001 (2001-05-11) & JP 2001 194161 A (ALPINE ELECTRONICS INC), 19 July 2001 (2001-07-19)

## Description

### Technical Field of the Invention

This invention relates to a route guidance system, a route guidance method and a route guidance program, particularly to a route guidance system, a route guidance method and a route guidance program for guiding a vehicle along a route to a destination.

### Background Art

In recent years, vehicle route guidance systems (navigation systems) have come into wide use that, when input with a destination, determine the optimum route from the current location to the destination and offer route guidance by directing the driver along the determined optimum route.

Moreover, advances in telecommunications technology have made it possible for a remote information center to send a map and map-related information over the Internet (see, for example, Japanese Patent Unexamined Publication No. 11(1999)-1001653). This has made it possible for in-vehicle route guidance systems to provide route guidance using the most up-to-date map and map-related information.

Meanwhile, technologies have been proposed for using a camera (eye tracking camera) installed in front of the vehicle driver's seat to detect the direction of the driver's line of sight and using the detected line of sight to operate air conditioner switches, for instance (Japanese Patent Unexamined Publication No. 6(1994)-261863), for regulating headlight beam direction or meter display brightness in response to driver visual activity (Japanese Unexamined Patent Publication No. 9(1997)-768815), and for using driver sight line direction to estimate driver concentration on driving operations.

Using the conventional route guidance system, a driver a making a right or left turn at a T-junction or a right-angle crossroads can easily decide the course to take from the map and course directions (route guidance) displayed on the display.

However, at a complicated intersection, like a five-way intersection, or where there are several intersections within a short distance or the road has a complex shape, the conventional course directions (route guidance) may confuse the driver about which branch road to take at an intersection and make the driver unable to decide the right one.

In view of this situation, a need is felt for a route guidance system (navigation system) that enables the driver to confidently decide the branch road to be taken without hesitation even at a complicated intersection or the like.

In order to develop a route guidance system satisfying this need, the inventors sought to apply the aforesaid technology for detecting driver visual activity (visual direction and visually recognized object) to a route guidance system. From foreman patent DE 10037573 it is known to detect the driver's live of sight and to project navigation guidance arrow in this direction.

### Summary of the Invention

An object of the present invention is to provide a route guidance system, a route guidance method and a route guidance program that enable a driver to confidently take the right branch road without hesitation even at a complicated intersection or the like.

Another object of the present invention is to provide a route guidance system, a route guidance method and a route guidance program that enable a driver to confidently take the right branch road without hesitation even at a complicated intersection or the like in an unfamiliar place.

In order to achieve the aforesaid objects, the present invention in a first aspect provides a route guidance system for guiding a vehicle along a route to a destination, the system comprising destination setting means for setting a destination, visual activity discriminating means for discriminating whether a driver's visual activity is right in light of route guidance to the set destination, and affirmation/vision guidance means for affirming the driver's visual activity when the driver's visual activity is right and giving route guidance by visually guiding the driver when the driver's visual activity is wrong.

In a second aspect, the present invention provides a route guidance method for guiding a vehicle to a destination, the method comprising a destination setting step for setting a destination, a visual activity discriminating step for discriminating whether a driver's visual activity is right in light of route guidance to the set destination, and an affirming/vision guiding step for affirming the driver's visual activity when the driver's visual activity is right and giving route guidance by visually guiding the driver when the driver's visual activity is wrong.

In a third aspect, the present invention provides a route guidance program for guiding a vehicle along a route to a destination, the program controlling a computer to set a destination, discriminate whether a driver's visual activity is right in light of route guidance to the set destination, affirm the driver's visual activity when the driver's visual activity is right and give route guidance by visually guiding the driver when the driver's visual activity is wrong.

In accordance with the first, second and third aspects of the present invention, discrimination is made as to whether the driver's visual activity is right in light of route guidance to the set destination and affirms the driver's visual activity when the driver's visual activity is right. As this assurance relieves the driver's apprehension, the driver can drive through a complicated intersection or the like without hesitation. When the driver's visual activity is wrong, the driver is given route guidance by vision guidance so that the route guidance can be effectively carried out.

In the foregoing first, second and third aspects of the present invention, the affirmation/vision guidance means (step) preferably affirms the driver's visual activity when the driver visually recognizes the branch road designated by the route guidance and, when the driver does not recognize the branch road designated by the route guidance, guides the driver's vision to the branch road using the object visually recognized by the driver at that time as a reference.

In accordance with the present invention, the driver's visual activity is affirmed when the driver visually recognizes the branch road designated by the route guidance, so that the driver can confidently take the branch road without hesitation. When the driver does not visually recognize the branch road designated by the route guidance, vision guidance is given with reference to the branch road or an object visually recognized by the driver, so that effective vision guidance can be given promptly without wasted visual activity by the driver.

In the foregoing first, second and third aspects of the present invention, when the distance from the vehicle location to the branch road designated by the route guidance is equal to or greater than a predetermined value representing a long distance, the affirmation/vision guidance means (step) preferably affirms the driver's visual activity if the direction of the driver's vision substantially coincides with the direction of the branch road, and when it does not coincide, guides the driver's vision to the direction of the branch road.

In accordance with the present invention, simple and effective vision guidance is possible because when the distance from the vehicle location to the branch road designated by the route guidance is long, the affirmation and vision guidance are conducted using the direction of the branch road as a reference.

In the foregoing first, second and third aspects of the present invention, when the distance from the vehicle location to the branch road designated by the route guidance is equal to or greater than a predetermined value representing a long distance, the affirmation/vision guidance means (step) preferably affirms the driver's visual activity if the direction of the driver's vision substantially coincides with the direction of the branch road, and when it does not coincide, informs the driver of the distance to the branch road and guides the driver's vision to the direction of the branch road.

In accordance with the present invention, simple and effective vision guidance is possible and, in addition, reliable guidance is possible because the driver is informed of both the direction of and distance to the branch road and, therefore, can instantaneously visualize the branch road and its direction.

In the foregoing first, second and third aspects of the present invention, the affirmation/vision guidance means (step) preferably conducts affirmation and vision guidance by voice guidance.

In accordance with the present invention, since affirmation and vision guidance are conducted by voice guidance, the driver can drive while keeping his or her eyes on the road and its vicinity without need to view the screen of the route guidance system. The route guidance can therefore be conducted safely and reliably.

In the foregoing first, second and third aspects of the present invention, the affirmation/vision guidance means (step) preferably changes the particulars of the vision guidance for the driver during driving in accordance with a vision guidance level for the driving conditions.

In accordance with the present invention, since the driving conditions and the particulars of the vision guidance are associated, the vision guidance can be matched to the driving conditions to enable safe driving during route guidance.

In the foregoing first, second and third aspects of the present invention, the affirmation/vision guidance means (step) preferably changes the vision guidance reference object serving as the reference for the vision guidance of the driver in accordance with the vision guidance level.

In accordance with the present invention, since the vision guidance reference object is changed in accordance with the driving conditions, vision guidance in accordance with the driving conditions becomes possible to enable safe driving during route guidance.

In the foregoing first, second and third aspects of the present invention, the affirmation/vision guidance means (step) preferably first gives vision guidance regarding the direction of the branch road designated by the route guidance, and then visually guides the driver to the branch road and affirms the driver's visual activity if the driver visually recognizes the branch road.

In accordance with the present invention, the driver is first given vision guidance regarding the direction of the branch road designated by the route guidance and is then visually guided to the branch road, i.e., is given vision guidance that changes in particulars as the driver approaches the branch road designated by the route guidance. The vision guidance can therefore be conducted reliably and accurately.

In the foregoing first, second and third aspects of the present invention, the affirmation/vision guidance means (step) preferably first gives vision guidance regarding the direction of the branch road designated by the route guidance, and then guides the driver's vision to the branch road and affirms the driver's visual activity if the driver visually recognizes the branch road.

In the foregoing first, second and third aspects of the present invention, the affirmation/vision guidance means (step) preferably discriminates whether the driver can visually recognize the branch road designated by the route guidance from the driver's current location and if the driver cannot, guides the driver's vision to the direction of the branch road.

In the foregoing first, second and third aspects of the present invention, the affirmation/vision guidance means (step) preferably discriminates whether the driver can visually recognize the branch road designated by the route guidance from the driver's current location and if the driver cannot, informs the driver of the distance to the branch road and guides the driver's vision to the direction of the branch road.

In the foregoing first, second and third aspects of the present invention, the affirmation/vision guidance means (step) preferably discriminates whether the driver can visually recognize the branch road designated by the route guidance from the driver's current location and if the driver cannot, guides the driver's line of sight to the direction of the branch road to notify the driver of the branch road in advance and guides the driver's vision to the branch road at a location where the branch road can be visually recognized.

In accordance with the present invention, even if the driver cannot visually recognize the branch road designated by the route guidance from the current location, the driver can be made aware of the direction of the branch road so as to relieve the driver's anxiety and enable right vision guidance for the situation at hand.

In the foregoing first, second and third aspects of the present invention, the affirmation/vision guidance means (step) preferably advances the time point of the vision guidance when forward visibility is relatively poor such as during night and rainy condition driving.

In accordance with the present invention, since the time point of the vision guidance is advanced when forward visibility is relatively poor, the vision guidance can be conducted more safely and reliably.

The foregoing first, second and third aspects of the present invention preferably further comprises vision guidance disable means (step) for disabling vision guidance when the driver's vision is directed outside a predetermined range.

In the foregoing first, second and third aspects of the present invention, the affirmation/vision guidance means (step) preferably visually guides the driver using a vision guidance reference object located forward of the vehicle as a reference when the driver's visual activity is wrong.

In accordance with the present invention, since the driver is visually guided using a vision guidance reference object located forward of the vehicle as a reference when the driver's visual activity is wrong, the driver can be reliably visually guided

In the foregoing first, second and third aspects of the present invention, preferably the vision guidance reference object is a structure, and the affirmation/vision guidance means (step) causes the driver to visually recognize the structure located forward of the vehicle, visually guides the driver to the branch road designated by the route guidance using the structure as a reference and further affirms the driver's visual activity when the driver visually recognizes the branch road.

In accordance with the present invention, since a large and conspicuous structure that that the driver can easily visually recognize is used as the vision guidance reference object, the driver can be visually guided to the branch road designated by the route guidance easily and reliably.

In the foregoing first, second and third aspects of the present invention, preferably the vision guidance reference object is at least one traffic signal, and the affirmation/vision guidance means (step) guides the driver's vision to the branch road designated by the route guidance using the number of traffic signals from the vehicle location to the branch road and affirms the driver's visual activity when the driver visually recognizes the branch road.

In accordance with the present invention, since at least one traffic signal, the easiest object for the driver to recognize, is used as the vision guidance reference object and the driver's vision is guided to the branch road designated by the route guidance using the number of traffic signals to the branch road, the driver can be visually guided easily and reliably.

In the foregoing first, second and third aspects of the present invention, preferably the vision guidance reference object is another vehicle driving ahead of the driver's vehicle, the present invention further comprises an image recognition device for recognizing objects located ahead of the vehicle, and the affirmation/vision guidance means (step) causes the driver to visually recognize the other vehicle driving ahead that was recognized by the image recognition device, guides the driver's line of vision to the branch road designated by the route guidance using the other vehicle as a reference, and further affirms the driver's visual activity when the driver visually recognizes the branch road.

In accordance with the present invention, since a vehicle driving ahead, an object relatively easy for the driver to recognize, is used as the vision guidance reference object, the driver can be visually guided to the branch road designated by the route guidance easily and reliably.

In the foregoing first, second and third aspects of the invention, preferably the vision guidance reference object is a traffic sign installed on the road the vehicle is driving on, and the affirmation/vision guidance means (step) causes the driver to visually recognize the traffic sign, guides the driver's vision to the branch road designated by the route guidance using the traffic sign as a reference and affirms the driver's visual activity when the driver visually recognizes the branch road.

In accordance with the present invention, since a traffic sign, an object relatively easy for the driver to recognize, is used as the vision guidance reference object, the driver can be visually guided to the branch road designated by the route guidance easily and reliably.

In the foregoing first, second and third aspects of the present invention, preferably the vision guidance reference object is a vision guidance cue projected on the vehicle windshield, and the affirmation/vision guidance means (step) causes the driver to visually recognize the vision guidance cue, guides the driver's vision to the branch road designated by the route guidance using the vision guidance cue and affirms the driver's visual activity when the driver visually recognizes the vision guidance cue.

In accordance with the present invention, since a vision guidance cue projected on the vehicle windshield is used as the vision guidance reference object, the driver can be visually guided to the branch road designated by the route guidance easily and reliably even if no appropriate vision guidance reference object is present forward of the driven vehicle.

In the foregoing first, second and third aspects of the present invention, the affirmation/vision guidance means (step) preferably retrieves an object located in an area near the branch road designated by the route guidance as the vision guidance reference object.

In the foregoing first, second and third aspects of the present invention, the affirmation/vision guidance means (step) preferably retrieves a vision guidance reference object located in an area of a predetermined range θ centered on the road the vehicle is driving on.

In the foregoing first, second and third aspects of the present invention, the affirmation/vision guidance means (step) preferably sets the value of the predetermined range θ smaller in proportion as the distance to the branch road designated by the route guidance is longer, the vehicle driving conditions are worse, and the vehicle is larger or its turning radius is smaller.

In the foregoing first, second and third aspects of the present invention, the affirmation/vision guidance means (step) preferably guides the driver's vision to the direction of the branch road designated by the route guidance when a vision guidance reference object cannot be specified.

In accordance with the present invention, since the driver's vision is guided to the direction of the branch road designated by the route guidance when a vision guidance reference object cannot be specified, the driver can drive in the direction of the branch road without hesitation even if a vision guidance reference object cannot be specified.

In the foregoing first, second and third aspects of the present invention, the affirmation/vision guidance means (step) preferably provides vision guidance by exaggeratedly displaying the vision guidance reference object on a display.

In accordance with the present invention, since the vision guidance reference object is exaggeratedly displayed on a display, the driver can instantaneously recognize the vision guidance reference object so that the driver can be visually guided to the branch road designated by the route guidance easily and reliably.

In the foregoing first, second and third aspects of the present invention, the affirmation/vision guidance means (step) preferably selects a vision guidance reference object that is easy to visually recognize when forward visibility is relatively poor such as during night and rainy condition driving.

In accordance with the present invention, even when forward visibility is relatively poor such as during night and rainy condition driving, the driver can be visually guided to the branch road designated by the route guidance easily and reliably since the driver can easily visually recognize the vision guidance reference object.

The foregoing first, second and third aspects of the present invention preferably further comprises correction means (a correction step) for under predetermined conditions correcting the particulars of the control for executing the vision guidance by the affirmation/vision guidance means, so as to enhance the accuracy of the vision guidance.

In accordance with the present invention, effective vision guidance is possible and safety can be improved because under predetermined conditions the particulars of the control for executing the vision guidance are corrected so as to enhance the accuracy of the vision guidance.

In the foregoing first, second and third aspects of the present invention, the time point of the control for executing vision guidance is advanced in proportion as the reaction time period between vision guidance by the affirmation/vision guidance means and the driver's visual recognition response is longer. Further, the time point of the vision guidance control is preferably advanced in proportion as weather conditions make the driver's visual recognition more difficult. Still further, the time point of the vision guidance control is preferably advanced more at night than during the day.

The present invention thus corrects (advances) the time point of the vision guidance control when it is difficult for the driver to recognize the vision guidance reference object to which his or her vision is guided. As this prolongs the time period for the vision guidance by the amount of the advance, recognition of the vision guidance reference object is made easier, thereby enabling effective vision guidance and increasing safety.

In the foregoing first, second and third aspects of the present invention, correction is preferably conducted to enhance the driver's visual recognition accuracy more in a region unfamiliar to the driver than in a region familiar to the driver.

In accordance with the present invention, the driver can drive reliably and with no decrease of safety even in an unfamiliar region because correction is conducted to enhance the driver's visual recognition accuracy in a region unfamiliar to the driver.

### Brief Description of the Drawings

In the accompanying drawings:
Figure 1 is a basic configuration diagram showing a route guidance system that is a first embodiment of the present invention;
Figure 2 is a schematic perspective view showing a vehicle installed with the route guidance system of the first embodiment of the present invention;
Figure 3 is a view from the rear of the vicinity of the driver's seat of a vehicle installed with the route guidance system of the first embodiment of the present invention;
Figure 4 is a schematic view for explaining a retrieval condition 2 for specifying a vision guidance reference object in the first embodiment of the present invention;
Figure 5 is a schematic view for explaining a retrieval condition 3 for specifying a vision guidance reference object in the first embodiment of the present invention;
Figure 6 is a schematic view for explaining a retrieval condition 4 for specifying a vision guidance reference object in the first embodiment of the present invention;
Figure 7 is diagram showing an example of vision guidance of a driver by the route guidance systems according to first and second embodiments of the present invention;
Figure 8 is a diagram showing an example of a display screen during vision guidance of a driver by the route guidance system of the first embodiment of the present invention;
Figure 9 is a diagram showing another example of a display screen during vision guidance of a driver by the route guidance system of the first embodiment of the present invention;
Figure 10 is a chart showing vision guidance levels, distance from vehicle location to guidance-designated branch road (intersection) and vision guidance particulars in the route guidance systems of the first and second embodiments of the present invention;
Figure 11 is a flowchart showing the flow of operations (route guidance method) of the route guidance system of the first embodiment of the present invention; Figure 12 is a basic configuration diagram showing a route guidance system that is a second embodiment of the present invention;
Figure 13 is a schematic perspective view showing a vehicle installed with the route guidance system of the second embodiment of the present invention;
Figure 14 is a chart showing the priority order of vision guidance reference objects selected by the route guidance system of the second embodiment of the present invention;
Figure 15 is a flowchart showing the flow of operations (route guidance method) of the route guidance system of the second embodiment of the present invention;
Figure 16 is a flowchart showing the flow of operations of the route guidance system of the second embodiment of the invention when disabling vision guidance;
Figure 17 is a flowchart showing the flow of control operations for vision guidance conducted by the route guidance system of the second embodiment of the present invention;
Figure 18 is a flowchart showing the flow of operations for setting the time point of vision guidance in the route guidance system of the second embodiment of the present invention;
Figure 19 is a flowchart showing the flow of operations in vision guidance by the route guidance system of the second embodiment of the present invention for ascertaining driver visual recognition of the vision guidance reference object or visual recognition direction ("now-checking" switch provided);
Figure 20 is a flowchart showing the flow of operations in vision guidance by the route guidance system of the second embodiment of the present invention for ascertaining driver visual recognition of the vision guidance reference object or visual recognition direction ("now-checking" switch not provided); and
Figure 21 is a screen used to make initial settings in the route guidance system of the second embodiment of the present invention.

### Detailed Description of the Preferred Embodiments

Preferred embodiments of the present invention will now be explained with reference to the drawings.

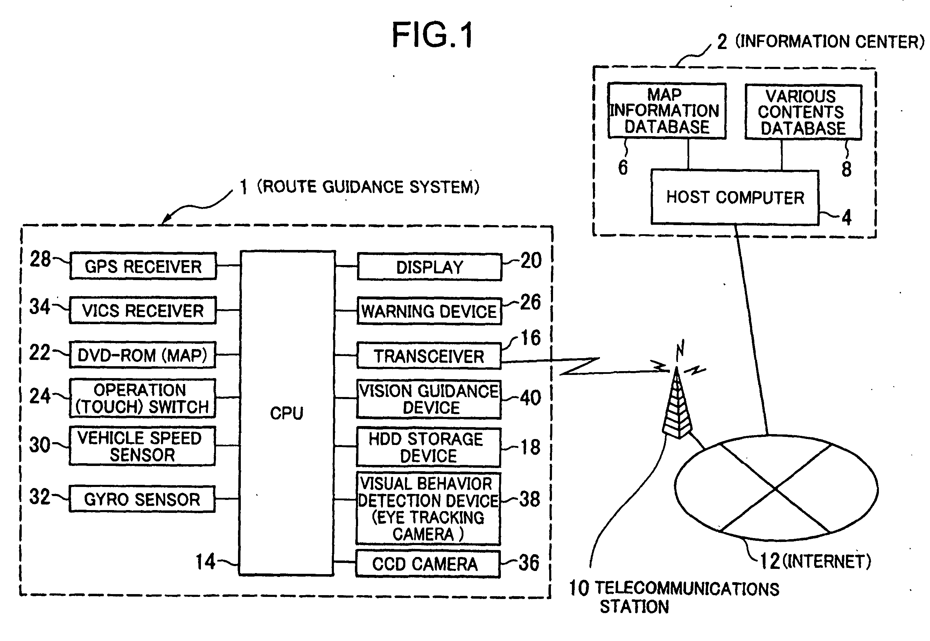

A route guidance system, route guidance method and route guidance program according to a first embodiment of the present invention will be explained with reference to Figures 1 to 11. Figure 1 is a basic configuration diagram showing a route guidance system that is a first embodiment of the present invention.

In Figure 1, reference numeral 1 designates a vehicle route guidance system (navigation system). An information center 2 is provided externally of the vehicle. The information center 2 is composed of a host computer 4, a map information database 6 storing map information and the like, and a various contents database 8 storing various contents.

The vehicle route guidance system 1 is connected to the Internet 12 through one of numerous telecommunications stations 10 installed region by region. Through this connection, the vehicle route guidance system 1 installed in the vehicle and can acquire various information, including map information, from the information center 2.

As explained later in more detail, the vehicle is equipped with map information (a DVD-ROM 22) so that route guidance (including the vision guidance explained later) can be provided even when map information cannot be obtained from the information center 2. Map information acquired from the information center 2 enables more accurate route guidance because it is always up to date.

So as to be able to provide the vehicle with route directions (route guidance) to its destination based on input data and the operations of the driver, the vehicle route guidance system 1 is equipped with a CPU 14 and a transceiver 16 for receiving various map and other information from the information center 2 via the Internet 12 and telecommunications station 10 and for sending information from the vehicle to the information center 2. The transceiver 16 is a car phone or a mobile phone.

The vehicle route guidance system 1 is further equipped with an HDD storage device 18 for storing received map information and the like, a display 20 for displaying map information and the vision guidance explained later, the aforesaid DVD-ROM 22, which stores map information separate from that acquired information center 2 and is provided independently by the vehicle owner, for example, an operation switch 24 for use by the driver to set a destination and request map information and the like from the information center 2, and a warning device 26 that issues a warning when information cannot received from the information center.

The vehicle route guidance system 1 is also equipped with a GPS receiver 28 for detecting the vehicle's current location, a vehicle speed sensor 30 and a gyro sensor 32. The GPS receiver 28 detects the current location from received satellite signals, the vehicle speed sensor 30 detects the vehicle speed for use in calculating distance traveled, the gyro sensor 32 detects the vehicle travel direction. The current location of the vehicle can be accurate ascertained from the values detected by the sensors 28, 30 and 32.

The vehicle route guidance system 1 is additionally equipped with a VICS receiver 34 for acquiring traffic congestion information from the information center 2 or another traffic information center (not shown).

The vehicle route guidance system 1 is further equipped with a CCD camera 36, a visual activity detection device (eye tracking camera) 38 and a vision guidance device 40. These are pieces of equipment for providing the driver with the vision guidance explained later.

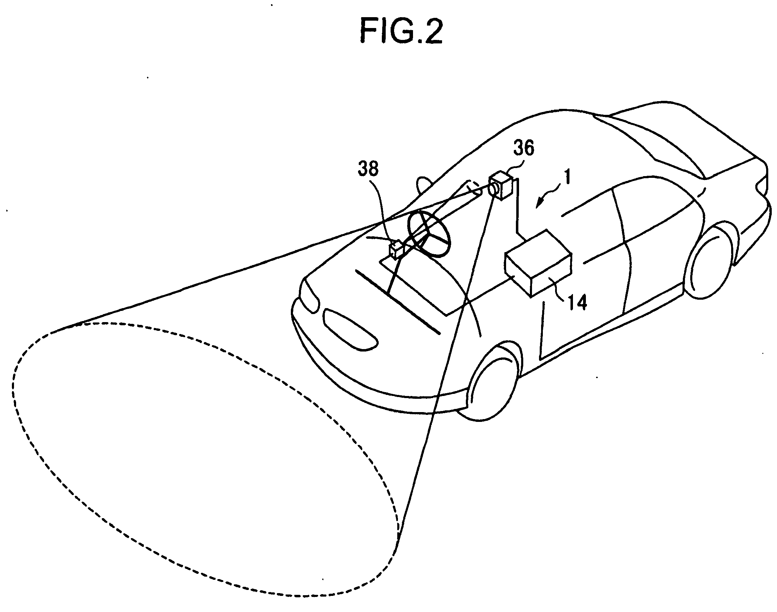

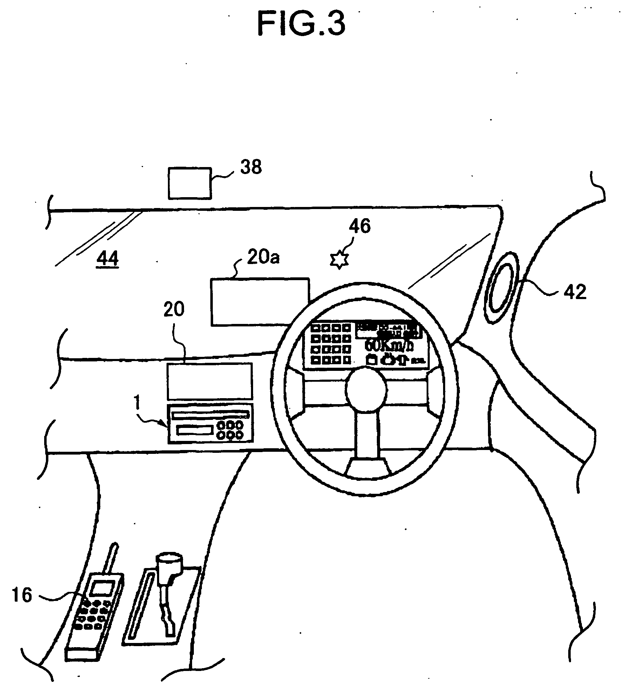

As illustrated in Figures 2 and 3, the CCD camera 36 is for imaging the view ahead and around the vehicle. Its direction can be adjusted vertically and laterally. The CCD camera 36 is has image recognition capability. By processing the imaged view, it can, for example, recognize another vehicle driving ahead (corresponding to what is later called a "vision guidance reference object"), traffic volume (presence and degree of congestion), presence and number of pedestrians, whether it is night, and whether or not it is raining.

The eye tracking camera 38 is installed forward of the vehicle driver's seat. It is a visual activity detector for detecting the direction of the driver's line of sight and what the driver is looking at (visually recognized object). As the visual activity detector (eye tracking camera) can be used one adopting any of various technologies, including the EOG method, photoelectric element EOG (P-EOG) method, retina reflection method, first/fourth Purkinje image detecting method, contact lens method, search coil method and infrared ray fundus camera method.

The vision guidance device 40 judges whether the driver's visual activity detected by the eye tracking camera 38 (sight line direction and/or watched object) is right in light of the route guidance, affirms the visual activity when it is right, and, when it is wrong, visually guides the driver to the branch road designated by the route guidance. As shown in Figure 3, a speaker 42 is installed in the A pillar near the driver's seat. The speaker 42 can be used to give the driver voice guidance with regard to course directions and vision guidance.

Further, in order to visually guide the driver, a guidance beam is projected by a beam projector (not shown) onto the windshield 44 to display a spot that the drive perceives as a vision guidance cue 46. The object to which the driver's line of sight should be guided (later called the "vision guidance reference object") is present on an extension of the line connecting the driver's eye location and the vision guidance cue 46.

In addition, an OHD device (not shown) displays a screen on the windshield 44 as an auxiliary display 20a identical to that of the display 20.

The vision guidance device 40 will now be explained in detail. The vision guidance device 40 possess discrimination capability for discriminating whether the driver's visual activity is right in light of the route guidance, affirmation capability for affirming the driver's visual activity when it is right, and vision guidance capability for visually guiding the driver when his or her visual activity is wrong.

Specifically, when the driver visually recognizes the branch road designated by the route guidance, i.e., when the driver accurately visually recognizes the branch road to be taken, the vision guidance device 40 gives the driver voice guidance, such as "That's right." When the driver does not visually recognize the branch road designated by the route guidance, the vision guidance device 40 guides the driver's vision to the designated by the route guidance using the object visually recognized by the driver at that time as a reference.

Otherwise, as another method, when the driver does not visually recognize the branch road designated by the route guidance, the vision guidance device 40 can first guide the driver to progressively recognize vision guidance reference objects convenient for conducting the vision guidance and finally guide the driver's vision to the branch road designated by the route guidance.

Or, as still another method, when the driver does not visually recognize the branch road designated by the route guidance, the vision guidance device 40 can guide the driver's vision to the direction of the branch road designated by the route guidance.

The term "vision guidance reference objects convenient for conducting the vision guidance" used here is defined as follows. In a situation where the branch road designated by the route guidance is relatively easy to perceive, such as at a T-junction or right-angle crossroads, selection (retrieval) of a vision guidance reference object is made in the priority order of, among objects located ahead of the vehicle with respect to its direction of travel, 1) traffic signal, 2) structure (convenience store, service station, clock tower, statue or other conspicuous building or the like), 3) vehicle ahead (bus, truck or other large conspicuous vehicle), 4) traffic sign or billboard (conspicuous sign for traffic control or other purpose), and 5) the aforesaid guidance beam. The easiest vision guidance reference object for the driver to notice is a traffic signal, followed by a structure, vehicle ahead, traffic sign and other sign. When no such vision guidance reference object is present, the vision guidance device 40 selects the guidance beam as the vision guidance reference object.

In the case of a complicated intersection or the like, e.g., at a five-way intersection, where there are several intersections within a short distance or where the road has a complex shape, selection of a-vision guidance reference object is made in the priority order of: 1) structure (convenience store, service station, clock tower, statue or other conspicuous building or the like), 2) vehicle ahead (bus, truck or other large conspicuous vehicle), 3) traffic sign or billboard (conspicuous sign for traffic control or other purpose), and 4) the aforesaid guidance beam. Selection of a traffic signal as the vision guidance reference object is not appropriate at a complicated intersection or the like because the driver would become confused about which branch road to take. Therefore, in the selection of the vision guidance reference object, top priority is given to a structure, the most easily perceived object, followed by a vehicle ahead, a traffic or other sign, and the guidance beam.

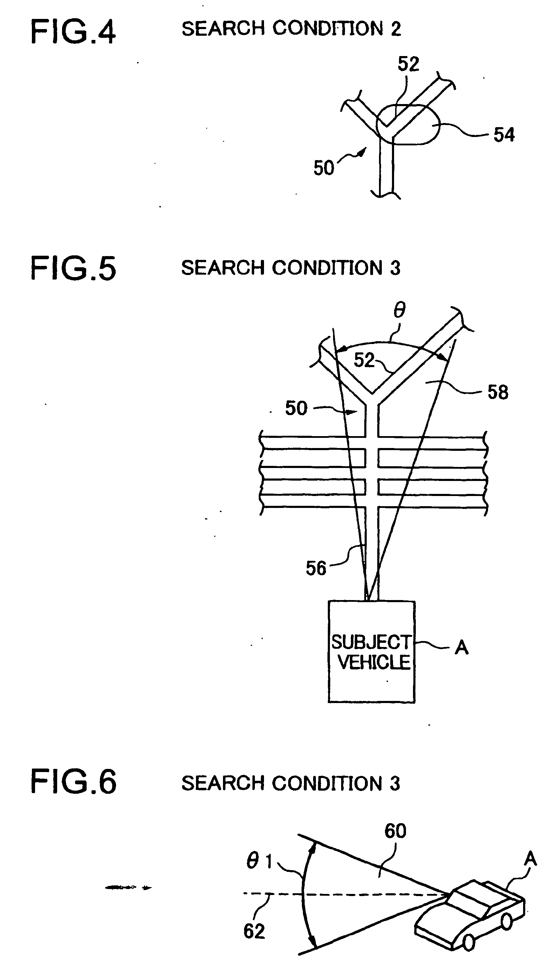

The retrieval conditions for specifying a vision guidance reference object when the vision guidance device 40 visually guides the driver will now be explained with reference to Figures 4 to 6.

In retrieval condition 1, if the driver is looking at something, the object that he or she is looking at is itself defined as the vision guidance reference object and used as a reference for guiding the driver's vision to the branch road designated by the route guidance. The voice guidance given at this time is, for example, "Turn right at the second road beyond the road you are looking at."

In retrieval condition 2, as exemplified with respect to an intersection 50 in Figure 4, a vision guidance reference object is selected (retrieved) based on the foregoing criteria from within an area 5 near the branch road 52 designated by the route guidance at an intersection 50.

In retrieval condition 3, as exemplified in Figure 5, a vision guidance reference object is selected based on the foregoing criteria from within an area 58 extending over a range 9 centered on the current road 56 as viewed from the guided vehicle A. At this time, θ is narrowed in proportion as the distance from the vehicle A to the branch road 52 at the intersection 50 designated by the route guidance is longer, is narrowed in proportion as the driving environment is worse (traffic volume and number of pedestrians is greater), is made maximum (180 degrees) when the vehicle A is stopped, is narrowed in proportion as the vehicle speed is greater; and is narrowed in proportion as the turning radius is smaller. Regulating the value of θ in this manner enables selection of a vision guidance reference object convenient for vision guidance.

Further, in retrieval condition 3, as exemplified in Figure 6, a vision guidance reference object is selected based on the foregoing criteria from within an area 60 extending over a vertical range θ1 ahead of the vehicle A. At this time, θ1 is broadened in proportion as the distance from the vehicle A to the branch road 52 designated by the route guidance is longer, is narrowed in the range above its center 62 in proportion as said distance is shorter, is narrowed in its upper range in proportion as the driving environment is worse (traffic volume and number of pedestrians is greater), is made maximum (180 degrees) when the vehicle A is stopped, is narrowed in its upper range in proportion as the vehicle speed is greater, and is narrowed in its upper range in proportion as the turning radius is smaller. Regulating the value of θ1 in this manner enables selection of a vision guidance reference object convenient for vision guidance.

In retrieval condition 4, when a vision guidance reference object cannot be selected (specified) in any of the foregoing conditions 1-3, the vision guidance reference object retrieval is terminated, the direction of the branch road designated by the route guidance is indicated to the driver, and when the driver thereafter looks at the branch road designated by the route guidance, voice guidance is given to the effect of "That's right."

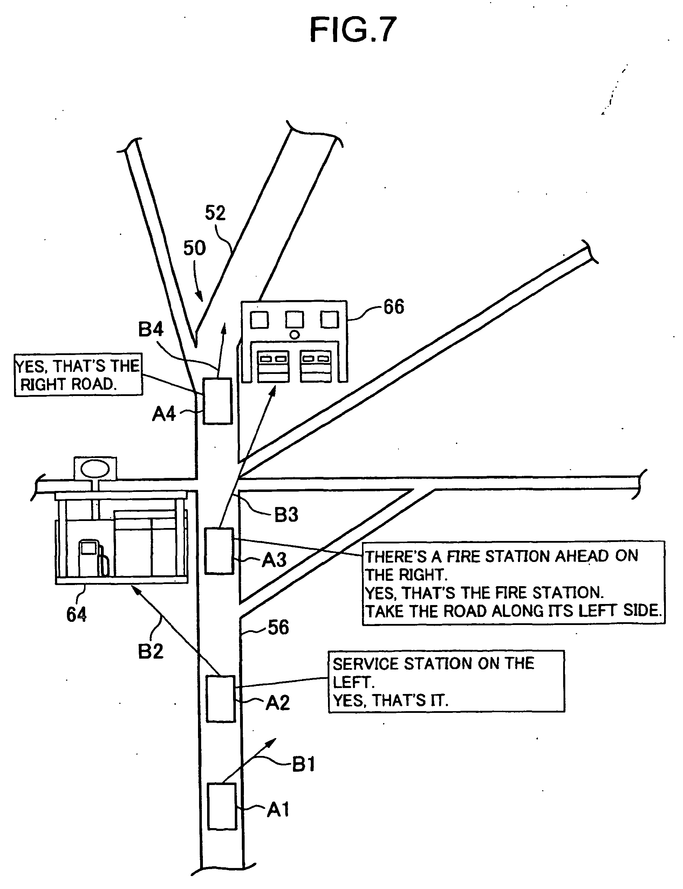

Next, an example of the vehicle route guidance system 1 of this embodiment giving the driver vision guidance during route guidance to the destination will be explained with reference to Figure 7. Figure 7 exemplifies an example in which many intersections exist within a short distance. It therefore includes not only the map displayed on the display 20 but also superimposed information, including the driver sight line direction, the vision guidance reference object, and the voice guidance given. Road 56 in Figure 7 is the designated road along which the guided vehicle A is to be guided. It is displayed to appear wider than the other roads (exaggerated display) to make it easy for the driver to recognize.

As shown in Figure 7, the guided vehicle A is traveling along the guidance-designated road 56. At this time, the driver's line of sight is initially directed toward the guidance-designated road 56. The course directions to the destination call for the vehicle A to turn right onto the branch road 52 at the intersection 50 ahead. There are two intersections before the intersection 50, making it difficult for the driver to identify the branch road 52 designated by the route guidance. When such a situation is encountered, the driver is visually guided to the branch road 52 (road requiring a right turn) at the intersection 50 as explained in the following.

First, at the vehicle A1 location, the driver is looking in the direction of about two o'clock as indicated at B1. In other words, the drive is not watching the road 56 in line with the course directions. At the vehicle A2 location, therefore, a service station 64 is selected as a vision guidance reference object and the voice guidance announces, "Service station on the left," is given. Simultaneously, the mark representing the service station 64 on the map on the display 20 is enlarged. As indicated at B2, this vision guidance causes the driver to perceive (visually recognize) the service station 64 located on the left in accordance with the voice guidance and the enlarged display of the service station 64. At this time, the voice guidance announces the affirmation, "Yes, that's it."

In providing the driver with vision guidance, the method used to call the driver's attention to the service station 64 (vision guidance reference object) is not limited to enlarged display as mentioned here, and any of various other exaggerated display methods, such as change to a conspicuous color or blinking display, can be used instead or in addition.

Next, at the vehicle A3 location, when the vehicle is driving past the service station 64, a fire station 66 is selected as a vision guidance reference object, and the voice guidance announces, "There's a fire station ahead on the right." Simultaneously, the mark representing the fire station 66 is enlarged. As indicated at B3, the driver perceives (visually recognizes) the fire station 66 located ahead on the right in 5 accordance with the voice guidance and the enlarged display of the fire station 66. At this time, the voice guidance announces the affirmation, "Yes, that's the fire station," and further announces, "Take the road long its left side."

At the vehicle A4 location just before the intersection 50, the driver sees the branch road 52 designated by the route guidance and the voice guidance announces the affirmation, "Yes, that's the right road."

Thus the driver can enter the branch road 52 to be taken at the intersection 50 reliably without hesitation

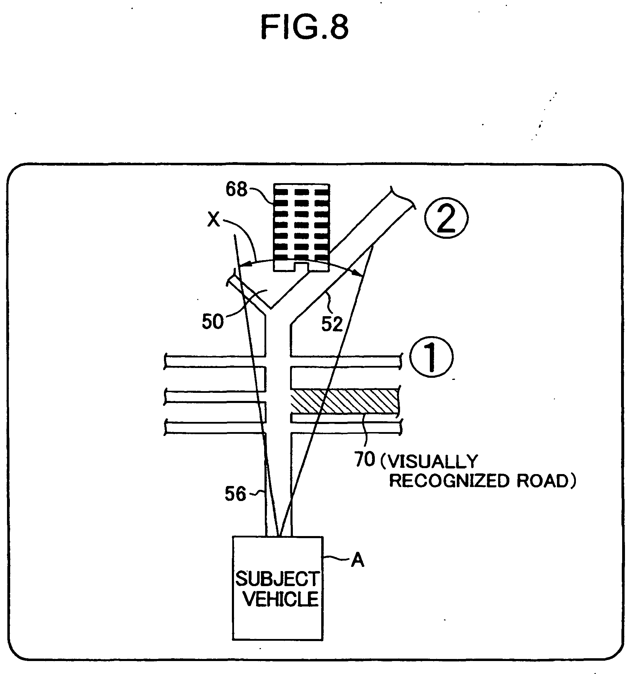

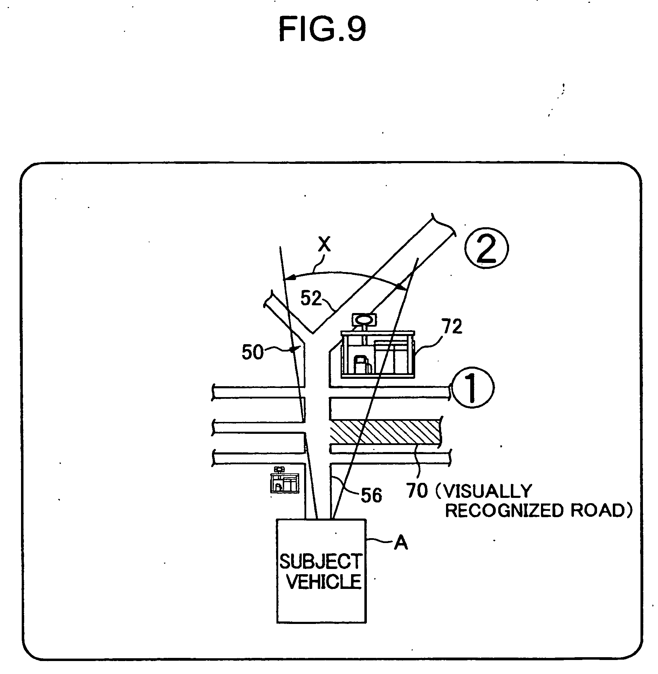

Another example of the vehicle route guidance system 1 of this embodiment giving the driver vision guidance will now be explained with reference to Figures 8 and 9. Figures 8 and 9 show screens appearing on the display 20 during vision guidance in accordance with the present embodiment.

As seen in Figure 8, the map appearing on the screen of the display 20 displays the optimum route (road) 52, 56 for giving the driver route guidance (course directions) to the destination in a larger width than the other roads so as to make the road 52, 56 easy for the driver to notice. The driver's vision range X detected by the eye tracking camera 38 is also displayed. In order to visually guide the driver, it is first necessary to retrieve (specify) a vision guidance reference object for the vision guidance. In this example, since the distance from the vehicle A to the intersection 50 to which route guidance -is to be given is relatively long, a building 68 visible beyond an intersection 50 is retrieved (selected) as the vision guidance reference object. The driver's vision is then guided to the building 68 by enlarging it on the displayed screen (exaggerated display). This makes the driver recognize that the branch road 52. designated by the route guidance is in the direction of the building 68.

If the eye tracking camera 38 should detect that the driver has visually recognized not the branch road 52 designated by the route guidance but another road 70, the display of the road 70 is enlarged (or exaggerated in some other way such by changing its color or making it blink). The road 70 is then used as a reference for visually guiding the driver. Specifically, on the map appearing on the display, the roads up to and including the branch road 52 are superimposed with numerals (two numerals (1) and (2) in this example), whereafter the driver is visually guided by the voice guidance announcement, "The road to take is second road beyond the one you are looking at." In other words, the road 70 the driver is looking at is exaggeratedly displayed to differentiate it from the branch road 52 designated by the route guidance. This makes the driver realize that he or she is looking at a road 70 different from branch road 52 designated by the route guidance.

In the example shown in Figure 8, it is possible to give only vision guidance using the building 68 visible beyond the intersection 50 as a vision guidance reference object, give only vision guidance using the road 70 noticed by the driver as a reference, or give these two types of vision guidance in combination.

In the example shown in Figure 9, the driver's vision range X is displayed and a gasoline station 72 near the intersection 50 is retrieved as a vision guidance reference object. Next, vision guidance is given by enlarging the displayed gasoline station 72. This makes the driver aware that the branch road 52 is in the direction of the left side of the gasoline station 72. In this example, as in the example of Figure 8, the road 70 the driver is looking at can be used as a reference for the vision guidance. This example is the same as that explained with reference to Figure 8 in other aspects.

As shown in Figures 7 to 9, while the driver is being given vision guidance, various information for the vision guidance is shown on the display screen (such as map information, vision range, guidance-designated route and visually recognized object). To view the display screen, the driver must direct his or her line of sight in the direction of the display screen, and in order to give the driver vision guidance it is necessary for the driver to accurately recognize the information displayed on the screen. The displayed screen is therefore maintained for a predetermined period (several seconds).

When a display screen is maintained for a predetermined period during vision guidance in this manner, in some instances the driver may once look away from the display screen and then return to it. It is therefore made possible to return to and maintain the display screen previously viewed by the driver.

Such maintenance of the display screen for a predetermined time period makes it possible to visually guide the driver with better accuracy and enables the driver to distinguish the road to be taken without hesitation.

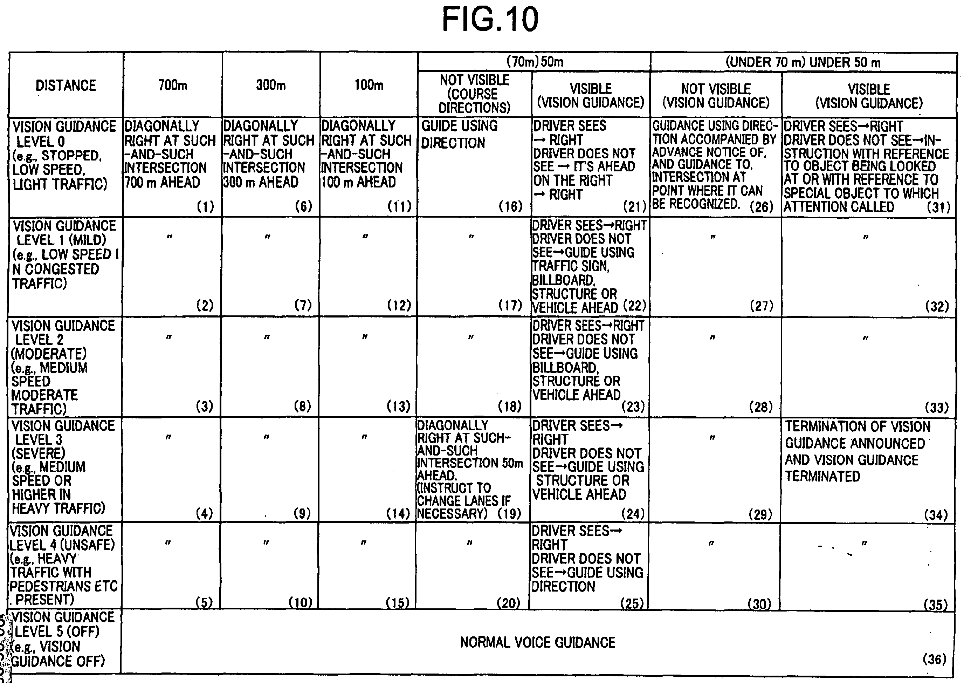

The route guidance system of this embodiment changes the particulars of the vision guidance depending on the driving conditions (vehicle speed, traffic volume, presence of pedestrians etc.) and the distance from the vehicle location to the branch road designated by the route guidance. Figure 10 is a chart showing an example of how this embodiment changes the particulars of the vision guidance in accordance with driving conditions and distance from the vehicle location to the branch road designated by the route guidance. Figure 10 is explained in detail in the following.

The vision guidance level is categorized into level 0 to level 5 based on the conditions ahead. Vision guidance level 0 refers to such circumstances as when the vehicle is stopped, driving at low speed or driving in light traffic, i.e., conditions enabling thorough vision guidance. Vision guidance level 1 refers to such circumstances as when the vehicle is driving at low speed on a congested road, i.e., mild conditions that make vision guidance slightly difficult. Vision guidance level 2 refers to such circumstances as when the vehicle is driving at medium speed in moderate traffic, i.e., moderate conditions that make vision guidance difficult. Vision guidance level 3 refers to such circumstances as when the vehicle is driving at medium speed or higher in heavy traffic, i.e., severe conditions that make vision guidance still more difficult. Vision guidance level 4 refers to such circumstances as when the vehicle is driving in heavy traffic with pedestrians etc. present, i.e., dangerous conditions that make vision guidance extremely difficult. Vision guidance level 5 refers to the case where the vision guidance switch (not shown) is off and the driver does not want vision guidance. No vision guidance is conducted at level 5.

In the present embodiment, the particulars of the vision guidance are changed in accordance with the driving conditions (vehicle speed and traffic conditions around vehicle) defined by the vision guidance levels 0 to 5.

In this embodiment, distance from the vehicle location to the branch road (intersection) designated by the route guidance is divided into stages of, for instance, 700m, 300m, 100m, 50 m and less than 50 m, and the particulars of the route guidance (including vision guidance) are changed in accordance with the stage.

In the present embodiment, as shown in Figure 10, regions (1) to (36) are established for different combinations of vision guidance level and distance from the vehicle location to the branch road designated by the route guidance. The particulars of the route guidance (including vision guidance) are differentiated by region.

An example of the nature of the route guidance (vision guidance) provided by the present embodiment will now be explained in detail with reference to Figure 10. When the distance form the vehicle location to the intersection (branch road) designated by the route guidance is 100 m or greater, and the vision guidance level is 0 - 4 (regions 1 - 15), course directions are given by a voice guidance announcement such as, ''Diagonally right at such-and-such intersection 700 m ahead." That is, when the distance from the vehicle location to the intersection (branch road) designated by the route guidance is long, the voice guidance gives the distance to the intersection, the name of the intersection and the direction at the intersection.

In the regions 1 - 15, the foregoing route directions can be given either alone or together with vision guidance. When vision guidance is given, if the direction in which the driver is looking is the direction in which the intersection (branch road) designated by the route guidance is located, the voice guidance gives the affirmation, "That's the right direction." When the driver does not visually recognize (see) the intersection (branch road) designated by the route guidance, the voice guidance guides the driver's vision to the direction of the intersection (branch road) by announcing, "Look diagonally right."

When the distance between the vehicle location and the intersection (branch road) has become 100 - 50 m (at night, when rainy, etc., 100 - 70 m as explained later), the driver is given normal course directions when the branch road designated by the route guidance is not visible (because the road being driven curves, for example). Specifically, in the regions 16 - 18 at vision guidance levels 0-2, the driver is guided to the direction of the intersection designated by the route guidance. In regions 19 and 20 at vision guidance levels 3 and 4, the voice guidance announces, "Diagonally right at such-and-such intersection 50 m ahead," and, if necessary, the driver is instructed to change lanes.

Moreover, in the regions 16 - 20, the foregoing route directions can be given either alone or together with vision guidance. When vision guidance is given, if the direction in which the driver is looking is the direction in which the branch road designated by the route guidance is located, the voice guidance gives the affirmation, "That's the right direction." When the driver does not see the branch road designated by the route guidance, the voice guidance guides the driver's vision to the direction of the branch road by announcing, "Look diagonally right."

As shown at regions 21 - 25 in Figure 10, if the branch road is visible to the driver, vision guidance is given. In region 21, at vision guidance level 0, if the driver sees the branch road designated by the route guidance, the voice guidance announces, "That's right." If the driver does not see the branch road, the voice guidance announces, for instance, "It's ahead on the right," and when the driver visually recognizes the branch road designated by the route guidance, the voice guidance announces, "That's right."

Nearly the same vision guidance is also given at vision guidance levels 1-4. However, at vision guidance level 1 (region 22), the vision guidance is given using a vision guidance reference object selected in the aforesaid priority order of traffic sign, billboard, structure and vehicle ahead. At vision guidance level 2 (region 23), the vision guidance is given using a vision guidance reference object selected in the aforesaid priority order of billboard, structure and vehicle ahead. At vision guidance level 3 (region 24), the vision guidance is given using a vision guidance reference object selected in the aforesaid priority order of structure and vehicle ahead. At vision guidance level 4 (region 25), vision guidance is given using the direction of the road to be taken.

Thus, in regions 21-25, the vision guidance reference object is changed with vision guidance level. This is because the driver must concentrate increasingly on driving as the vision guidance level passes from 1 to 4. So, while no problem arises in conducting vision guidance at vision guidance level 0, it is preferable to select a larger and more conspicuous vision guidance reference object as the vision guidance level passes from 1 to 4. The aim is to lessen the degree of attention the driver needs to pay to the vision guidance reference object during vision guidance and thereby ensure that the vision guidance does not decrease the driver's concentration on driving, which is the primary concern.

When the distance between the vehicle location and the branch road (intersection) has become less than 50 m (at night, when rainy, etc., less than 70 m as explained later), the driver is given vision guidance using the direction and a landmark (intersection) when the branch road is not visible (because the road being driven curves, for example). Specifically, in the regions 26 - 30 at vision guidance levels 0 - 4, the driver is given direction-based vision guidance and, in the course of this guidance, is given advance notice of the intersection and visually guided to it from a location where the intersection can be seen. For example, the voice guidance announces; "An intersection will soon be visible on the right. It's the one. Turn right there." When the driver sees the branch road designated by the route guidance, the voice guidance announces, "That's right."

In regions 31 - 33, since the driver can see the branch road, basic vision guidance is given. When the driver sees the branch road designated by the route guidance, the voice guidance announces, "That's right," and when he or she does not, the driver's vision is guided to the branch road with reference to the object being viewed by the driver defined as the vision guidance reference object. Otherwise, in the manner explained earlier, the driver's vision can be guided to the branch road by causing the driver to notice (visually recognize) a specific vision guidance reference object and using it as a reference. In regions 35 and 35 at vision guidance levels 3 and 4, imminent termination of vision guidance is announced and the vision guidance is then terminated, because circumstances require the driver to concentrate on the primary concern of driving.

At vision guidance level 5, which corresponds to the case of the vision guidance switch (not shown) being turned off, vision guidance is terminated and normal voice guidance is given.

When, in the course of vision guidance, the range of the driver's vision range exceeds a predetermined value, e.g., if it is outside the range θ, the vision guidance is disabled. This is because the situation is either one that does not require vision guidance or one in which appropriate vision guidance is not possible.

Further, under conditions of relatively poor visibility, such as at night or when rainy, the driver is preferably given vision guidance at an earlier point in time. The time point of the vision guidance therefore needs to be advanced relative to that indicated in Figure 10. For example, the "50 m" distance specified for regions 15 - 25 in Figure 10 is preferably changed to "70 m", and the "under 50 m" distance specified for regions 26 - 35 is preferably changed to "under 70 m."

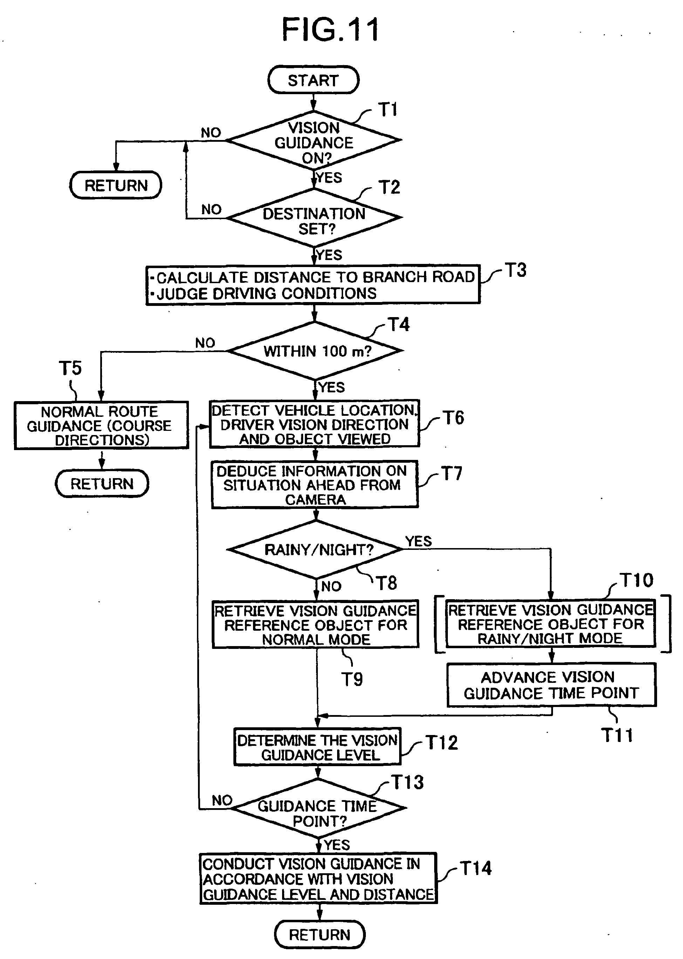

The flow of operations (route guidance method) of the route guidance system of this embodiment will now be explained with reference to Figure 11, in which the symbol T represents "step."

First, in T1, it is checked whether the vision guidance switch (not shown) is ON. When it is ON, next, in T2, it is checked whether a destination has been set. If a destination has been set, the process goes to T3, in which the distance from the vehicle location to the branch road designated by the route guidance is calculated and the driving conditions (vehicle speed etc.) are checked. Next, in T4, it is judged whether the vehicle location is within 100 m of the branch road (intersection) designated by the route guidance. If it is not within 100 m, i.e., if the distance to the branch road is considerable, the process goes to T5, in which normal route guidance (course directions) is conducted. No vision guidance is given at this time.

The foregoing steps T4 and T5 can be replaced by steps in which, as explained earlier, the vision guidance of regions 1 - 15 of Figure 10 is given when the distance from the vehicle location to the branch road is equal to or greater than 700 m, 300 m or 100 m.

Next, in T6, the vehicle location, driver vision direction and object viewed by the driver (including vision range) at that time are detected. Then, in T7, image recognition is carried out on the image taken by the CCD camera 36 to deduce information on conditions ahead of the vehicle (traffic volume, presence of pedestrians, whether raining, whether night, etc.). Next, in T8, a check is made as to whether it is rainy or night. When it is neither rainy nor night, the process goes to T9, in which a vision guidance reference object for normal mode (case of 50 m standard in Figure 10, for example) is retrieved. When it is rainy or night, the process goes to T10, in which a vision guidance reference object for rainy/night mode is retrieved. The retrieval of a vision guidance reference object for the rainy/night mode is configured to facilitate selection of a light-emitting object (e.g., a convenience store, gasoline station, vehicle ahead or the like). Next, in T11, the time point of the vision guidance is advanced. The advance of the vision guidance time point is made by, for example, changing 50 m to 70 m in Figure 10. Under rainy or night driving conditions, it suffices to conduct either T10 or T11, but it is also possible to conduct both steps.

Next, in T12, the vision guidance level (0 - 4) is determined. Then, in T13, it is determined whether the vision guidance time point has arrived. The vision guidance time point is, for example, the one indicated in the corresponding region shown in Figure 10. When the vision guidance time point has not yet arrived, the process returns to T6. When the vision guidance time point has arrived, the process goes to T14, in which vision guidance is conducted in accordance with the vision guidance level (0 - 4) and the distance from the vehicle location to the branch road designated by the route guidance (see Figure 10).

As explained in the foregoing, the route guidance system, route guidance method and route guidance program in accordance with the first embodiment of the present invention enable a driver to confidently take the right branch road without hesitation even at a complicated intersection or the like.

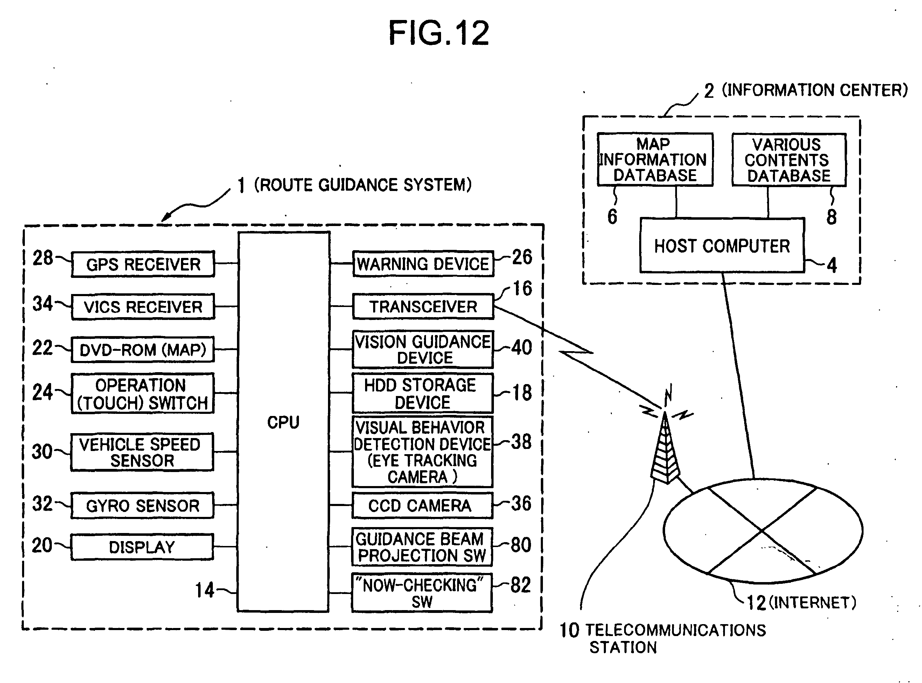

A route guidance system, route guidance method and route guidance program that are a second embodiment of the present invention will now be explained with reference to Figures 12 to 21. No explanation will be give with regard to portions similar to those of the first embodiment and only the portions that differ will be explained.

Figure 12 is a basic configuration diagram showing the route guidance system that is a second embodiment of the present invention. As shown in Figure 12, the vehicle route guidance system (navigation system) 1 is, like that according to the first embodiment, equipped with a CPU 14, transceiver 16, HDD storage device 18 , display 20, DVD-ROM 22, operation switch 24, warning device 26, GPS receiver 28, vehicle speed sensor 30, gyro sensor 32, VICS receiver 34, CCD camera 36, visual activity detector (eye tracking camera) 38 and vision guidance device 40.

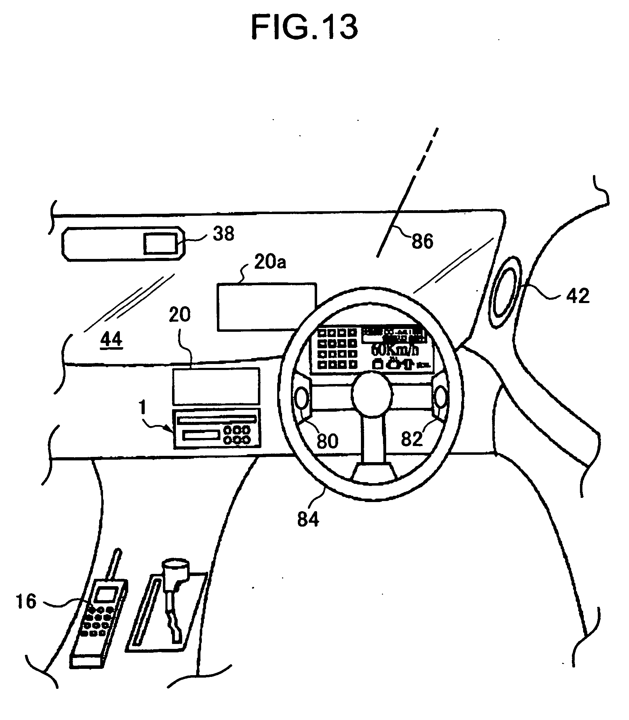

The vehicle route guidance system 1 is further equipped with a guidance beam projection switch 80 and a "now-checking" switch 82. As shown in Figure 13, the guidance beam projection switch 80 and "now-checking" switch 82 are attached to the steering wheel 84 for easy operation by the driver.

The CCD camera 36, visual activity detector (eye tracking camera) 38, vision guidance device 40, guidance beam projection switch 80 and "now-checking" switch 82 are used to visually guide the driver as explained later.

As shown in Figure 13, a guidance beam 86 is projected by a beam projector (not shown) onto the windshield 44 to visually guide the driver. An object to which it is desired to guide the driver's vision (a vision guidance reference object explained later) is present in the direction ahead indicated by the guidance beam 86.

The basic functions of the vision guidance device 40 of the second embodiment are the same as those of the first embodiment, i.e., it has discrimination capability for discriminating whether the driver's visual activity is right in light of the route guidance, affirmation capability for affirming the driver's visual activity when it is right, and vision guidance capability for visually guiding the driver when his or her visual activity is wrong.

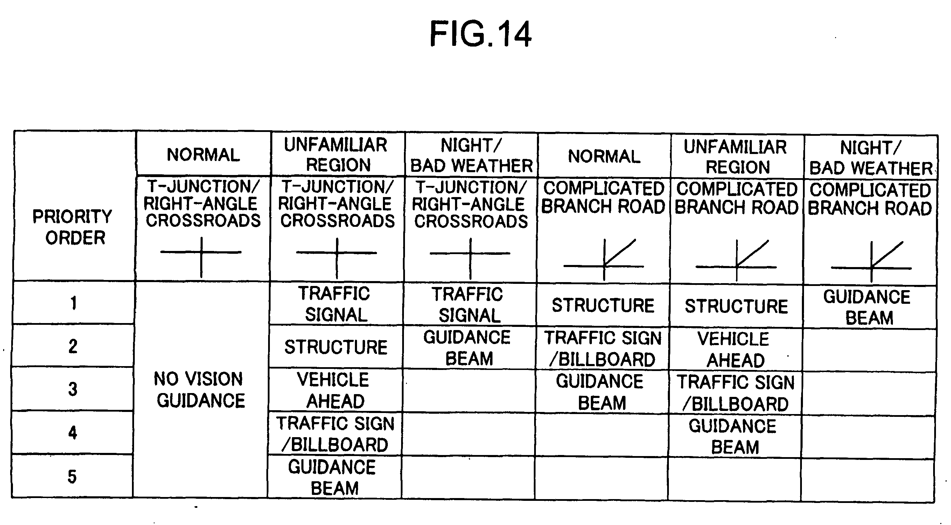

Vision guidance reference objects convenient for the vision guidance will now be explained with reference to Figure 14. In the case of a T-junction or right-angle crossroads in the region perceived by the driver, no vision guidance reference object is necessary because the vision guidance explained later is not conducted. In the case of a branch road designated by the route guidance that is relatively easy to recognize, such as a T-junction or right-angle crossroads in a region unfamiliar to the driver, selection of (retrieval) a vision guidance reference object is made in the priority order of, among objects located ahead of the vehicle with respect to its direction of travel, 1) traffic signal, 2) structure (convenience store, service station, clock tower, statue or other conspicuous building or the like), 3) vehicle ahead (bus, truck or other large conspicuous vehicle), 4) traffic sign or billboard (conspicuous sign for traffic control or other purpose), and 5) the aforesaid guidance beam. The easiest vision guidance reference object for the driver to perceive is a traffic signal, followed by a structure, vehicle ahead, traffic sign and other sign. When no such vision guidance reference object is present, the vision guidance device 40 selects the guidance beam as the vision guidance reference object.

In the case of a T-junction or right-angle crossroads under poor visibility conditions such as at night or during bad weather, selection of a vision guidance reference object is made in the priority order of: 1) traffic signal and 2) guidance beam.

In the case of a complicated intersection or the like in a region familiar to the driver, e.g., at a five-way intersection, where there are several intersections within a short distance or where the road has a complex shape, selection of a vision guidance reference object is made in the priority order of: 1) structure and 2) traffic sign or billboard and 3) guidance beam.

In the case of a complicated intersection in a region unfamiliar to the driver, selection of a vision guidance reference object is made in the priority order of 1) structure, 2) vehicle ahead, 3) traffic sign or billboard and 4) guidance beam. Selection of traffic signal as the vision guidance reference object is not appropriate at a complicated intersection or the like because the driver would become confused about which branch road to take. Therefore, in the selection of the vision guidance reference object, top priority is given to a structure, the most easily perceived object, followed by a vehicle ahead, a traffic sign or billboard, and the guidance beam.

In the case of a complicated intersection under poor visibility conditions such as at night or during bad weather, the guidance beam is selected as the vision guidance reference object.

In the route guidance to the destination of the second embodiment, the driver can, as in the first embodiment, be given vision guidance by a method like that illustrated in Figure 7. Specifically, as shown in Figure 7, when there are several intersections within a short distance, the driver can be visually guided to the branch road 52 (road requiring a right turn) at the intersection 50 by the vision guidance B2, B3, enlarged display of vision guidance reference objects (service station 64 and fire station 66), voice guidance etc.

In the second embodiment, as in the first, regions (1) to (36) are established based on the driving conditions (vision guidance levels 0-5) and distance from the vehicle location to the branch road designated by the route guidance. As shown in Figure 10, and the particulars of the route guidance (including vision guidance) are differentiated by region.

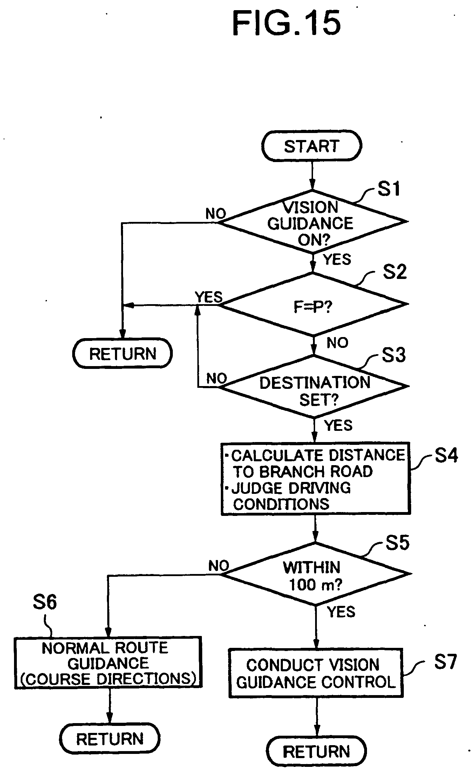

The flow of operations (route guidance method) of the route guidance system of the second embodiment will now be explained with reference to Figure 15, in which the symbol S represents "step."

First, in S1, it is checked whether the vision guidance switch (not shown) is ON. When it is ON, next, in S2, it is checked whether a vision guidance disable flag F is set to P. The flag F being set to P means that vision guidance is disabled. When vision guidance is not disabled, the process goes to S3, in which it is checked whether a destination has been set. When a destination has been set, the process goes to S4, in which the distance from the vehicle location to the branch road designated by the route guidance is calculated and the driving conditions (vehicle speed etc.) are checked. Next, in S5, it is judged whether the vehicle location is within 100 m of the branch road (intersection) designated by the route guidance. If it is not within 100 m, i.e., if the distance to the branch road is considerable, the process goes to S6, in which normal route guidance (course directions) is conducted. No vision guidance is given at this time.

S5 and S6 can be replaced by steps in which, as explained earlier, the vision guidance of regions 1 - 15 of Figure 10 is given when the distance from the vehicle location to the branch road is equal to or greater than 700 m, 300 m or 100 m.

Next, in S7, vision guidance is conducted in accordance with the distance from the vehicle location to the branch road designated by the route guidance (see Figure 10).

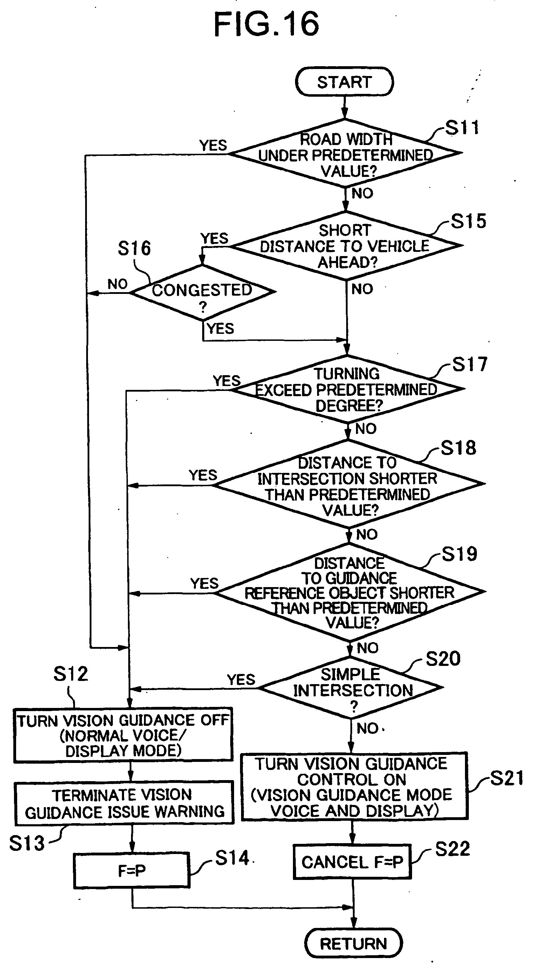

The subroutine for setting the vision guidance disable flag F (see S2 in Figure 15) will be explained with reference to Figure 16. This vision guidance disable subroutine represents the conditions for disabling the vision guidance when it is preferably not conducted from the viewpoint of driving safety.

First, in S11, it is checked whether the road width is less than a predetermined value. When the road width is less than the predetermined value, the driver needs to concentrate on driving. Since giving vision guidance in such a case would lower safety, the process goes to S12, in which the vision guidance is shut OFF, i.e., is disabled. In the route guidance system of this embodiment, the driver can choose between two types of route guidance, route guidance by course directions and route guidance by vision guidance (+course directions). Or the switching between the two types can be set to automatic. In addition, different voice and display patterns are set for each of route guidance and vision guidance. In S12, therefore, voice and display patterns for route guidance (normal mode voice and display) are set.

Next, in S 13, the driver is warned that the vision guidance has been terminated. This warning can be either displayed or announced by voice. Then, in S14, the vision guidance disable flag F is set to P.

When the result in S11 is NO, the process goes to S15, in which it is checked whether the distance to the vehicle ahead is a predetermined short distance. When the distance to the vehicle ahead is short, the process goes to S16, in which it is checked whether the traffic is congested. When the distance to the vehicle ahead is short but the traffic is not congested, the vehicle may be traveling at a relatively high speed. This is a situation in which the driver must concentrate on driving and no vision guidance is necessary. The process therefore goes to S12 to disable the vision guidance.

When the result in S 15 is NO or the result in S 16 is YES, the process goes to S17, in which it is checked whether the turning angle exceeds a predetermined amount. Specifically, the turning angle is found to exceed a predetermined amount when the steering angle exceeds a predetermined value at over a predetermined vehicle speed. This is a situation in which the driver must concentrate on driving and no vision guidance is necessary. The process therefore goes to S12 to disable the vision guidance.

When the result in S17 is NO, the process goes to S18, in which it is checked whether the distance to the intersection designated by the route guidance is shorter than a predetermined value. At the time of drawing near an intersection, route guidance (e.g., voice guidance to the effect of "Turn right at next intersection") is more effective than vision guidance. In addition, it is better from the viewpoint of safety to avoid vision guidance that causes the driver to shift his or her line of sight frequently. When the result in S 18 is YES, therefore, the process goes to S12 to disable the vision guidance.

When the result in S18 is NO, the process goes to S19, in which it is checked whether the distance to the guidance reference object is shorter than a predetermined value. When the distance is short, the process goes to S12 to disable the vision guidance for reasons similar to what was explained regarding S18.

When the result in S19 is NO, the process goes to S20, in which it is checked whether the intersection designated by the route guidance is a simple intersection (T-junction or right-angle crossroads). (A right-angle crossroads that is fairly close to another intersection is not considered a "simple intersection" because such a right-angle crossroads is hard for the driver to recognize.) In the case of a simple intersection, route guidance (e.g., voice guidance to the effect of "Turn right at next intersection") is more effective than vision guidance. The process therefore goes to S12 to disable vision guidance.

When the road width is not less than a predetermined value, the distance to the car ahead is long or, if short, the traffic is congested, the turning angle is not excessive (the vehicle is running straight or making a gentle curve), the distance to the intersection or guidance reference object is longer than the predetermined value, and the intersection is not a simple one, the process goes to S21, in which vision guidance control (combined with course direction control) is turned ON (conducted). At this time, the voice and display patterns for vision guidance (vision guidance mode voice and display) are set. Next, in S22, the F=P of the vision guidance disable flag F is canceled.

In the second embodiment, as shown in Figure 16, vision guidance is disabled when predetermined conditions are present. Safety is therefore enhanced because the driver can concentrate on driving without being caused to shift his or her vision (line of sight) owing to vision guidance. The driver can nevertheless drive reliably without hesitation even at complicated intersections and the like because the driver receives route guidance by course directions.

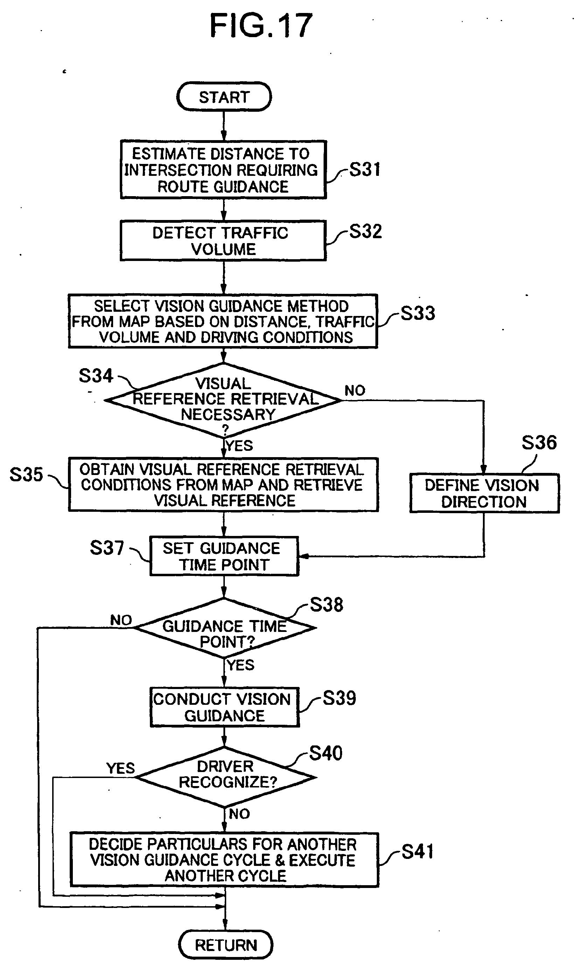

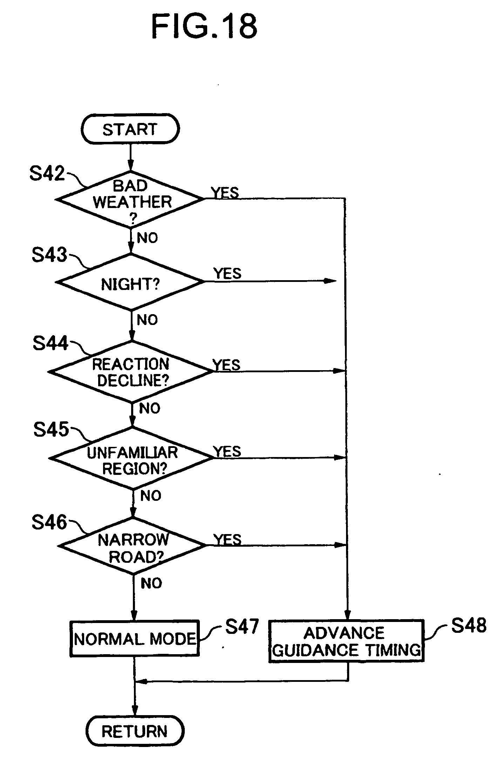

The vision guidance control particulars and the timing of the vision guidance in the second embodiment will now be explained with reference to Figures 17 and 18.

Figure 17 is a flowchart showing the control particulars of the vision guidance (combined with course direction). As shown in Figure 17, first, in S31, the distance to an intersection requiring route guidance is estimated. Next, In S32, the traffic volume is detected. The traffic volume can be estimated using the CCD camera 36, as explained earlier, or by acquiring traffic volume information from the information center 2. Next, in S33, the vision guidance method is decided from a map (hereinafter MAP), using the distance to the intersection, the traffic volume and the driving conditions as address data. As MAP is used that shown in Figure 10 and the vision guidance method is selected by selecting one of regions (1) - (36).

Next, in S34, it is checked whether retrieval of a vision guidance reference object (visual reference) is necessary. When the result is YES, the process goes to S35, in which vision guidance reference object (visual reference) retrieval conditions are obtained from MAP and the vision guidance reference object (visual reference) concerned is retrieved. Specifically, an appropriate vision guidance reference object is selected from MAP (corresponding to Figure 10) in accordance with the various conditions and the defined priority order.

When retrieval of a vision guidance reference object (visual reference) is unnecessary, such as in the case of providing vision direction guidance, the process goes to S36, in which a vision direction for the vision guidance is defined.

Next, in S37, the time point of the vision guidance is set. The method for setting the guidance time point will be explained in detail later with respect to the guidance timing subroutine of Figure 18.

Next, in S38, it is checked whether the guidance time point has arrived. When the result is YES, the process goes to S39, in which vision guidance is conducted.

Next, in S40, it is checked whether at the time the vision guidance was conducted the driver visually recognized the vision guidance reference object or whether the driver distinguished the vision direction. When it is found that the driver has not recognized the vision guidance reference object or the vision direction, the process goes to S41, in which the particulars for executing another cycle of the vision guidance are decided and another cycle is executed using the decided particulars. Specifically, the vision guidance reference object is changed, the contents of the voice guidance during vision guidance are changed and/or the vision direction is changed, and the changed vision guidance is executed.

The guidance timing will now be explained with reference to Figure 18. It is checked in S42 whether the weather is bad, in S43 whether it is night, and in S44 whether the driver's reaction to the vision guidance has declined. In S45 it is checked whether the region is unfamiliar to the driver, and in S46 whether the road width is narrower than a predetermined value.

When the weather is not bad (is good), it is not night (is day), the driver's reaction has not declined (is good), the region is not unfamiliar (is a known region), and the road is not narrow (is wide), i.e., under good conditions, the process goes to S47, in which the timing of the vision guidance is set to normal mode. Under such good conditions it can be assumed that the driver will react well, have good visibility and be familiar with the region. Since the driver can therefore be expected to easily notice the vision guidance reference object, normal guidance timing is sufficient.

On the other hand, when the weather is bad, it is night, the driver's reaction has declined, the region is unfamiliar, or the road is narrow, i.e., under conditions that make it hard for the driver to notice vision guidance reference objects, the process goes to S48, in which the guidance timing is advanced relative to that in normal mode.

Thus in the second embodiment, the timing (time point) of the vision guidance is advanced (made earlier) than usual when the driver is in an unfamiliar region, visibility is poor or the driver's reaction has declined. Since the time available for the vision guidance is therefore prolonged, the vision guidance can be effected with proportionally better accuracy.

Further, when the weather is bad, it is night, the driver's reaction has declined, the region is unfamiliar, or the road is narrow, the second embodiment can achieve similar effects by changing the vision guidance reference object to one more easily noticed by the driver, rather than by changing guidance timing.

Thus, in accordance with the second embodiment, even when the weather is bad, visibility is poor and/or the driver's reaction has declined, the driver can still drive through a complicated intersection without hesitation and, in addition, a decrease in safety can be avoided because the vision guidance can be provided with greater accuracy.

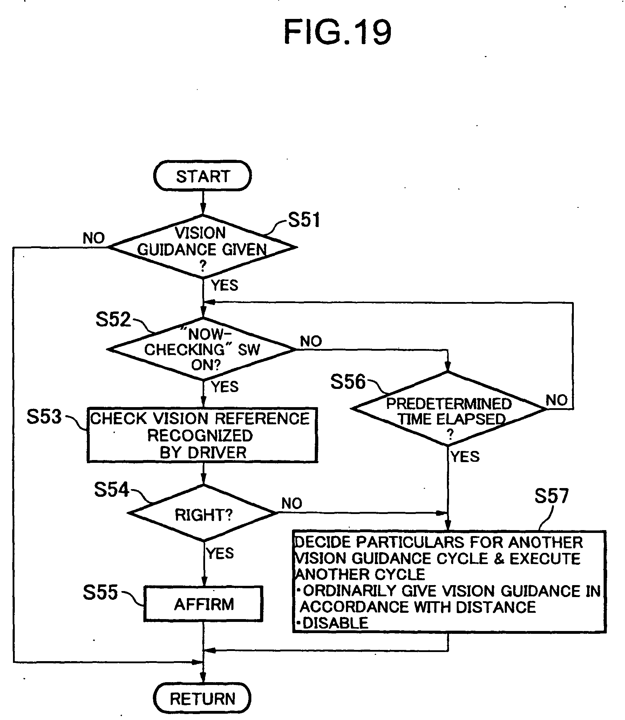

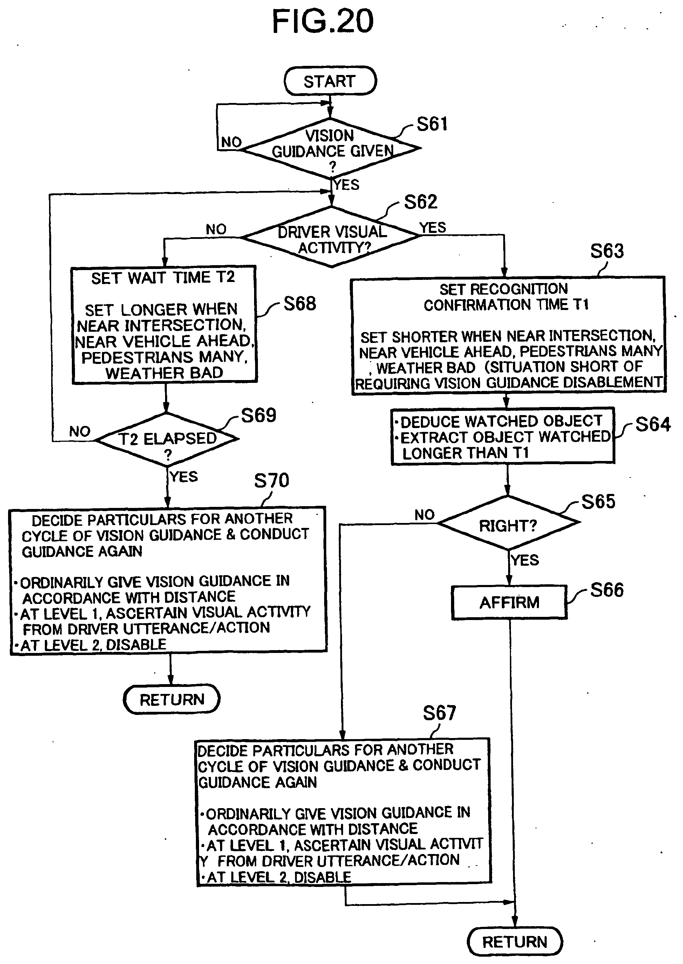

A flow of operations for ascertaining the driver's recognition of a vision guidance reference object or vision direction designated by the vision guidance will now be explained with respect to Figures 19 and 20. Figure 19 shows the flow of operations in a system equipped with a "now-checking" switch ("now-checking" switch 82; see Figures 12 and 13), and Figure 20 shows the flow of operations in a system not equipped with such a switch.

The method of Figure 19 will be explained first. In S51 at the start of the subroutine, it is checked whether vision guidance was given. When the result is YES, the process goes to S52, in which it is checked whether the "now-checking" switch is ON. As the "now-checking" switch 82 is turned on and off by the driver, its being ON can be interpreted as the driver's affirmation that he is trying to locate (or has located) the vision guidance reference object or vision direction designated by the vision guidance. Therefore, when the result in S52 is YES, the process goes to S53, in which the object or vision direction recognized by the driver is confirmed using the eye tracking camera 38 (see Figure 12). In other words, it is confirmed that the driver has tried to find the visual reference and reached a conclusion. Next, in S54, it is checked whether the visual reference recognized by the driver is the vision guidance reference object (is right). When right, the process goes to S55, in which the voice guidance announces, for example, That's right," to confirm the driver's visual activity.

When the result in S52 is NO, i.e., when the driver has not turned the "now-checking" switch ON even though vision guidance was given, the process goes to S56, in which it is checked whether a predetermined time has elapsed. When the result is YES, the process goes to S57. The process also goes to S57 when the result in S54 is NO.

In S57, the particulars for executing another cycle of the vision guidance are decided and another cycle is executed using the decided particulars. Specifically, as in the route guidance shown in Figure 10, vision guidance is in given in accordance with the distance to the intersection. When the distance to the intersection is short, the vision guidance is disabled and route guidance is given by only course directions.

Since the embodiment shown in Figure 19 is equipped with a "now-checking" switch that the driver turns ON when commencing visual activity in response to vision guidance. The completion of the driver's visual activity can therefore easily be confirmed. This makes it possible to execute another cycle of the vision guidance when the driver does not take any visual action in response to the vision guidance. As the next cycle of vision guidance is conducted at a point closer to the intersection by a distance proportional to the time passed since the preceding cycle, vision guidance in accordance with the distance from the intersection at that time can be given.

Next, flow of operations in the case where the "now-checking" switch is not provided will be explained with reference to Figure 20. First, in S61, it is checked whether vision guidance was given. When the result is YES, the process goes to S62, in which it is checked whether the driver engaged in visual activity in response to the vision guidance. The driver is judged to have engaged in visual activity when the eye tracking camera 38 detects a change in the driver's vision direction. When the result in S62 is YES, the process goes to S63.

In S63, a recognition confirmation time T1 for confirming that the driver recognized the vision guidance reference object (or vision direction), i.e., for confirming recognition completion, is set. The recognition confirmation time T1 is set shorter in proportion as the vehicle is closer to the intersection, the distance to the vehicle ahead is shorter, the number of pedestrians is greater and the weather is worse. The recognition confirmation time T1 is made shorter in this manner taking into account that the time available for the driver to recognize the vision guidance reference object (or vision direction) is shorter in proportion as these prevail.

Next, in S64, the watched object is deduced. Specifically, an object that the driver watched for time T1 or longer is extracted. Next, in S65, it is checked whether the object watched by the driver is the vision guidance reference object (is right). When right, the process goes to S66, in which the driver's visual activity is affirmed by a voice guidance announcement such as, "That's right."

When the result in S65 is NO, i.e., when the object watched (direction viewed) by the driver is not the vision guidance reference object (vision direction), the process goes to S67.

In S67, the particulars for executing another cycle of the vision guidance are decided and another cycle is executed using the decided particulars. Specifically, as in the route guidance shown in Figure 10, vision guidance is in given in accordance with the distance to the intersection. An utterance or action the driver is supposed to make when performing a visual activity at this time can be defined. By this it becomes possible to make the same judgment as when a "now-checking" switch is provided. When the distance to the intersection is short, the vision guidance is disabled and route guidance is given by only course directions.

When the result in S62 is NO, i.e., when the driver has not engaged in any visual activity even though vision guidance was given, the process goes to S68, in which a wait time T2 is set. The wait time T2 is the time to the start of the next vision guidance cycle. It is set longer in proportion as the vehicle is closer to the intersection, the distance to the vehicle ahead is shorter, the number of pedestrians is greater and the weather is worse. The wait time to the next cycle of the vision guidance is set long when the vehicle is near an intersection or another of these conditions prevails because in such situations there is little need for vision guidance and, if given, might be annoying and distract the driver from his or her principal business of driving the vehicle.

Next, in S69, it is checked whether time T2 has elapsed. If it has, the process goes to S70, in which procedures like those in S67 are conducted. That is, the particulars for executing another cycle of the vision guidance are decided and another cycle is executed using the decided particulars.

Although the embodiment shown in Figure 20 is not equipped with a "now-checking" switch, the completion of the driver's visual activity can nevertheless be easily be confirmed because the recognition confirmation time T1 is set and it is concluded that the driver's visual activity has been completed when the driver watches an object or maintains a vision direction for time T1 or longer. This makes it possible to execute another cycle of the vision guidance when the driver does not take any visual action in response to the vision guidance. Moreover, when the driver takes no visual action in response to the vision guidance, the wait time T2 is set and another cycle of the vision guidance is conducted upon passage of the wait time T2. A next cycle of the vision guidance can therefore be effectively conducted.

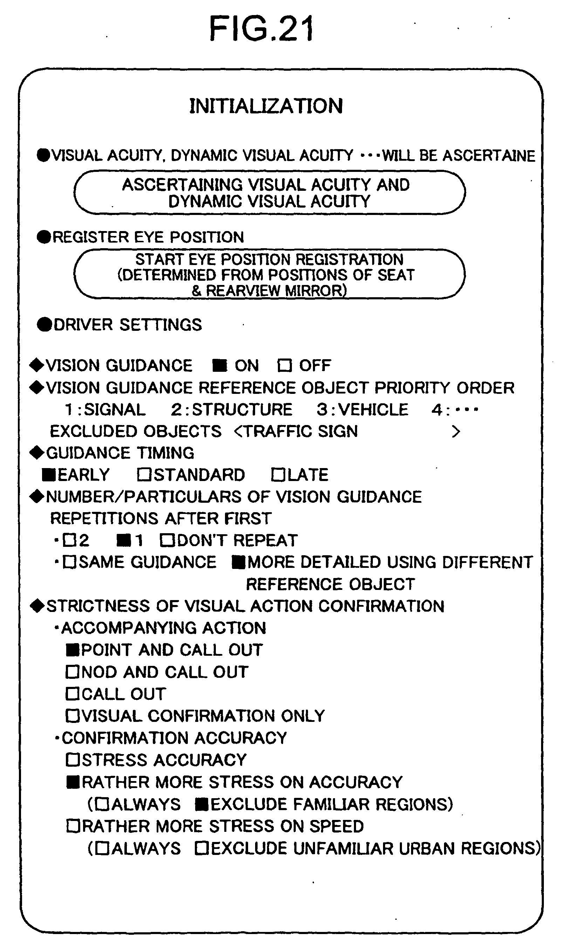

The initialization of the route guidance system will now be explained with reference to Figure 21. When vision guidance is to be conducted using the route guidance system, the route guidance system has to be input with required initial values reflecting the driver's preferences and personality traits. Figure 21 shows a screen for setting the initial values.

It is necessary first to input factors affecting the driver's visual power, such as visual acuity and dynamic visual acuity. When known beforehand, the level of the driver's visual power (visual acuity, dynamic visual acuity etc.) is input. If not known, the driver's visual power (visual acuity, dynamic visual acuity etc.) is ascertained by using the route guidance system itself to examined the driver's visual acuity, dynamic visual acuity and other visual powers. The ascertained visual powers may include color discrimination and day and night vision, in addition to visual acuity and dynamic visual acuity. These visual powers can be both input using known data and be ascertained by examination. The driver's visual power level is thus ascertained. As a result, if the driver's visual acuity should be somewhat poor, for example, the vision guidance timing can be advanced. If the driver is unable to distinguish a particular color, objects of that color can be eliminated as candidates when retrieving a vision guidance reference object. On the other hand, if the driver's night vision is poor, easily discernable vision guidance reference objects can be retrieved.

Next, the driver's eye position is recorded. The eye position can be set using, for example, the position of the driver's seat, position of the rearview mirror and the output of the eye tracking camera.

The driver is then allowed to enter settings based on his or her preferences. (When two or more drivers use the same vehicle, each can enter his or her own settings.) The first option is whether or not to conduct vision guidance. In other words, selection can be made between a vision guidance (+course directions) mode and a course directions mode.

Next, the priority order of the vision guidance reference objects is set. The standard setting is that indicated in Figure 14. But the driver is allowed to change the priority order of the vision guidance reference objects. If the driver objects to any particular vision guidance reference object, it can be designated for exclusion.

Three vision guidance timing options are offered: "Early," "Standard" and "Late."

The number of times the vision guidance is repeated after the first time can be selected. Or the driver can choose not to have the guidance repeated. Whether or not the particulars of the guidance should be changed with each repetition can also be selected.

The rigorousness of the driver's confirmation of having taken visual action can be can be set. While the driver's visual action is detected by the eye tracking camera, it can be confirmed with greater reliability by also defining an action the driver is to perform to confirm the visual action. The accompanying action options offered are: "Point and Call Out," "Nod and Call Out," "Call Out" and "Visual Confirmation Only" (i.e., only basic visual action confirmation with no accompanying action).

Further, the accuracy of the visual action confirmation can be selected from among: "Stress accuracy," "Rather more stress on accuracy" and "Rather more stress on speed" (quick confirmation of completion of driver's visual action). When "Rather more stress on accuracy" is selected, the driver can then choose to exclude familiar regions. When "Rather more stress on speed" is selected, the driver can choose to exclude unfamiliar urban regions.

Since the embodiment illustrated in Figure 21 allows the driver to match the nature and precision of the vision guidance to his or her particular tastes and personal traits, it can provide effective vision guidance, enhance the accuracy and feel of the vision guidance, and, by extension, upgrade safety.

As explained in the foregoing, the route guidance system, route guidance method and route guidance program of the second embodiment of the present invention enable a driver to drive confidently and without hesitation even at a complicated intersection or the like in an unfamiliar region. In addition, the accuracy of the vision guidance is enhanced to enable effective vision guidance and improve safety.

Although the present invention has been explained with reference to specific, preferred embodiments, one of ordinary skill in the art will recognize that modifications and improvements can be made while remaining within the scope and spirit of the present invention. The scope of the present invention is determined solely by appended claims.

## Claims

1. A route guidance system for guiding a vehicle along a route to a destination, the system comprising:
destination setting means for setting a destination;
visual activity discriminating means for discriminating whether a driver's visual activity is right in light of route guidance to the set destination; and
affirmation/vision guidance means for affirming the driver's visual activity when the driver's visual activity is right and giving route guidance by visually guiding the driver when the driver's visual activity is wrong.

2. A route guidance system according to claim 1, wherein the affirmation/vision guidance means affirms the driver's visual activity when the driver visually recognizes the branch road designated by the route guidance and, when the driver does not recognize the branch road designated by the route guidance, guides the driver's vision to the branch road using the object visually recognized by the driver at that time as a reference.

3. A route guidance system according to claim 1, wherein, when the distance from the vehicle location to the branch road designated by the route guidance is equal to or greater than a predetermined value representing a long distance, the affirmation/vision guidance means affirms the driver's visual activity if the direction of the driver's vision substantially coincides with the direction of the branch road, and when the direction of the driver's vision does not coincide with the direction of the branch road, guides the driver's vision to the direction of the branch road.

4. A route guidance system according to claim 1, wherein, when the distance from the vehicle location to the branch road designated by the route guidance is equal to or greater than a predetermined value representing a long distance, the affirmation/vision guidance means affirms the driver's visual activity if the direction of the driver's vision substantially coincides with the direction of the branch road, and when the direction of the driver's vision does not coincide with the direction of the branch road, informs the driver of the distance to the branch road and guides the driver's vision to the direction of the branch road.

5. A route guidance system according to any of claims 1 to 4, wherein the affirmation/vision guidance means conducts affirmation and vision guidance by voice guidance.

6. A route guidance system according to claim 1, wherein the affirmation/vision guidance means changes the particulars of the vision guidance for, the driver during driving in accordance with a vision guidance level for the driving conditions.

7. A route guidance system according to claim 6, wherein the affirmation/vision guidance means changes the vision guidance reference object serving as the reference for the vision guidance of the driver in accordance with the vision guidance level.

8. A route guidance system according to claim 1, wherein the affirmation/vision guidance means first gives vision guidance regarding the direction of the branch road designated by the route guidance, and then visually guides the driver to the branch road and affirms the driver's visual activity if the driver visually recognizes the branch road.

9. A route guidance system according to claim 1, wherein the affirmation/vision guidance means discriminates whether the driver can visually recognize the branch road designated by the route guidance from the driver's current location and if the driver cannot, guides the driver's vision to the direction of the branch road.

10. A route guidance system according to claim 1, wherein the affirmation/vision guidance means discriminates whether the driver can visually recognize the branch road designated by the route guidance from the driver's current location and if the driver cannot, informs the driver of the distance to the branch road and guides the driver's vision to the direction of the branch road.

11. A route guidance system according to claim 1, wherein the affirmation/vision guidance means discriminates whether the driver can visually recognize the branch road designated by the route guidance from the driver's current location and if the driver cannot, guides the driver's line of sight to the direction of the branch road to notify the driver of the branch road in advance and guides the driver's vision to the branch road at a location where the branch road can be visually recognized.

12. A route guidance system according to any of claims 1 to 11, wherein the affirmation/vision guidance means advances the time point of the vision guidance when forward visibility is relatively poor such as during night and rainy condition driving.

13. A route guidance system according to any of claims 1 to 12, wherein the system further comprises vision guidance disable means for disabling vision guidance by the affirmation/vision guidance means when the driver's vision is directed outside a predetermined range.

14. A route guidance system according to claim 1, wherein the affirmation/vision guidance means visually guides the driver using a vision guidance reference object located forward of the vehicle as a reference when the driver's visual activity is wrong.

15. A route guidance system according to claim 14, wherein the vision guidance reference object is a structure, and the affirmation/vision guidance means causes the driver to visually recognize the structure located forward of the vehicle, visually guides the driver to the branch road designated by the route guidance using the structure as a reference and further affirms the driver's visual activity when the driver visually recognizes the branch road.

16. A route guidance system according to claim 14, wherein the vision guidance reference object is at least one traffic signal, and the affirmation/vision guidance means guides the driver's vision to the branch road designated by the route guidance using the number of traffic signals from the vehicle location to the branch road and affirms the driver's visual activity when the driver visually recognizes the branch road.

17. A route guidance system according to claim 14, wherein the vision guidance reference object is another vehicle driving ahead of the driver's vehicle, the system further comprises an image recognition device for recognizing objects located ahead of the vehicle, and the affirmation/vision guidance means causes the driver to visually recognize the other vehicle driving ahead that was recognized by the image recognition device, guides the driver's line of vision to the branch road designated by the route guidance using the other vehicle as a reference, and further affirms the driver's visual activity when the driver visually recognizes the branch road.

18. A route guidance system according to claim 14, wherein the vision guidance reference object is a traffic sign installed on the road the vehicle is driving on, and the affirmation/vision guidance means causes the driver to visually recognize the traffic sign, guides the driver's vision to the branch road designated by the route guidance using the traffic sign as a reference and affirms the driver's visual activity when the driver visually recognizes the branch road.

19. A route guidance system according to claim 14, wherein the vision guidance reference object is a vision guidance cue projected on the vehicle windshield, and the affirmation/vision guidance means causes the driver to visually recognize the vision guidance cue, guides the driver's vision to the branch road designated by the route guidance using the vision guidance cue and affirms the driver's visual activity when the driver visually recognizes the vision guidance cue.

20. A route guidance system according to claim 14, wherein the affirmation/vision guidance means retrieves an object located in an area near the branch road designated by the route guidance as the vision guidance reference object.

21. A route guidance system according to claim 14, wherein the affirmation/vision guidance means retrieves a vision guidance reference object located in an area of a predetermined range θ centered on the road the vehicle is driving on.

22. A route guidance system according to claim 21, wherein the affirmation/vision guidance means sets the value of the predetermined range θ smaller in proportion as the distance to the branch road designated by the route guidance is longer, the vehicle driving conditions are worse, and the vehicle is larger or its turning radius is smaller.

23. A route guidance system according to claim 14, wherein the affirmation/vision guidance means guides the driver's vision to the direction of the branch road designated by the route guidance when a vision guidance reference object cannot be specified.

24. A route guidance system according to claim 14, wherein the affirmation/vision guidance means provides vision guidance by exaggeratedly displaying the vision guidance reference object on a display.

25. A route guidance system according to claim 14, wherein the affirmation/vision guidance means selects a vision guidance reference object that is easy to visually recognize when forward visibility is relatively poor such as during night and rainy condition driving.

26. A route guidance system according to claim 1, wherein the system further comprises correction means for under predetermined conditions correcting the particulars of the control for executing the vision guidance by the affirmation/vision guidance means, so as to enhance the accuracy of the vision guidance.

27. A route guidance system according to claim 26, wherein the correction means advances the time point of the control for executing vision guidance by the affirmation/vision guidance means in proportion as the reaction time period between vision guidance by the affirmation/vision guidance means and the driver's visual recognition response is longer.

28. A route guidance system according to claim 26, wherein the correction means advances the time point of for executing vision guidance of the control for executing the vision guidance by the affirmation/vision guidance means more in a region unfamiliar to the driver than in a region familiar to the driver.

29. A route guidance method for guiding a vehicle along a route to a destination, the method comprising:
a destination setting step for setting a destination;
a visual activity discriminating step for discriminating whether a driver's visual activity is right in light of route guidance to the set destination; and
an affirming/vision guiding step for affirming the driver's visual activity when the driver's visual activity is right and giving route guidance by visually guiding the driver when the driver's visual activity is wrong.

30. A route guidance method according to claim 29, wherein the affirmation/vision guidance step affirms the driver's visual activity when the driver visually recognizes the branch road designated by the route guidance and, when the driver does not recognize the branch road designated by the route guidance, guides the driver's vision to the branch road using the object visually recognized by the driver at that time as a reference.

31. A route guidance method according to claim 29, wherein the affirmation/vision guidance step visually guides the driver using a vision guidance reference object located forward of the vehicle as a reference when the driver's visual activity is wrong.

32. A route guidance method according to claim 29, wherein the method further comprises a correction step for under predetermined conditions correcting the particulars of the control for executing the vision guidance by the affirmation/vision guidance step, so as to enhance the accuracy of the vision guidance.

33. A route guidance program for guiding a vehicle along a route to a destination, the program controlling a computer to set a destination, discriminate whether a driver's visual activity is right in light of route guidance to the set destination, and affirm the driver's visual activity when the driver's visual activity is right and give route guidance by visually guiding the driver when the driver's visual activity is wrong.

34. A route guidance program according to claim 33, wherein the program controls the computer to affirm the driver's visual activity when the driver visually recognizes the branch road designated by the route guidance and, when the driver does not recognize the branch road designated by the route guidance, controls the computer to guide the driver's vision to the branch road using the object visually recognized by the driver at that time as a reference.

35. A route guidance program according to claim 33, wherein the program controls the computer to visually guide the driver using a vision guidance reference object located forward of the vehicle as a reference when the driver's visual activity is wrong.

36. A route guidance program according to claim 33, wherein the program controls the computer under predetermined conditions to correct the particulars of the control for executing the vision guidance so as to enhance the accuracy of the vision guidance.

## Patentansprüche

1. Zielführungssystem zum Führen eines Fahrzeugs entlang einer Strecke zu einem Ziel, wobei das System folgendes umfaßt:
- Zielsetzmittel zum Setzen eines Ziels;
- Visuelle-Aktivität-Unterscheidungsmittel zum Unterscheiden, ob die visuelle Aktivität eines Fahrers angesichts der Zielführung zu dem gesetzten Ziel richtig ist; und
- Bestätigungs-/ Sichtführungsmittel zum Bestätigen der visuellen Aktivität des Fahrers, wenn die visuelle Aktivität des Fahrers richtig ist, und Angeben einer Routenführung durch visuelles Führen des Fahrers, wenn die visuelle Aktivität des Fahrers falsch ist.

2. Zielführungssystem nach Anspruch 1, wobei das Bestätigungs-/ Sichtführungsmittel die visuelle Aktivität des Fahrers bestätigt, wenn der Fahrer visuell die von der Zielführung bezeichnete Nebenstraße erkennt, und, wenn der Fahrer nicht die von der Zielführung bezeichnete Nebenstraße erkennt, die Sicht des Fahrers zu der Nebenstraße führt, wobei das von dem Fahrer zu diesem Zeitpunkt visuell erkannte Objekt als Referenz verwendet wird.

3. Zielführungssystem nach Anspruch 1, wobei, wenn die Entfernung von dem Fahrzeugort zu der von der Zielführung bezeichneten Nebenstraße gleich oder größer als ein vorbestimmter Wert ist, der eine große Entfernung repräsentiert, das Bestätigungs-/Sichtführungsmittel die visuelle Aktivität des Fahrers bestätigt, wenn die Richtung der Sicht des Fahrers im wesentlichen mit der Richtung der Nebenstraße übereinstimmt, und wenn die Richtung der Sicht des Fahrers nicht mit der Richtung der Nebenstraße übereinstimmt, die Sicht des Fahrers in die Richtung der Nebenstraße führt.

4. Zielführungssystem nach Anspruch 1, wobei, wenn die Entfernung von dem Fahrzeugort zu der von der Zielführung bezeichneten Nebenstraße gleich oder größer als ein vorbestimmter Wert ist, der eine große Entfernung repräsentiert, das Bestätigungs-/Sichtführungsmittel die visuelle Aktivität des Fahrers bestätigt, wenn die Richtung der Sicht des Fahrers im wesentlichen mit der Richtung der Nebenstraße übereinstimmt, und wenn die Richtung der Sicht des Fahrers nicht mit der Richtung der Nebenstraße übereinstimmt, den Fahrer über die Entfernung zu der Nebenstraße informiert und die Sicht des Fahrers in die Richtung der Nebenstraße führt.

5. Zielführungssystem nach einem der Ansprüche 1 bis 4, wobei das Bestätigungs-/ Sichtführungsmittel eine Bestätigung und Sichtführung durch Sprachführung vornimmt.

6. Zielführungssystem nach Anspruch 1, wobei das Bestätigungs-/ Sichtführungsmittel die Einzelheiten der Sichtführung für den Fahrer während des Fahrens gemäß einem Sichtführungsgrad für die Fahrbedingungen ändert.

7. Zielführungssystem nach Anspruch 6, wobei das Bestätigungs-/ Sichtführungsmittel das als Referenz für die Sichtführung des Fahrers dienende Sichtführungsreferenzobjekt gemäß dem Sichtführungsgrad ändert.

8. Zielführungssystem nach Anspruch 1, wobei das Bestätigungs-/ Sichtführungsmittel die erste Sichtführung hinsichtlich der Richtung der von der Zielführung bezeichneten Nebenstraße angibt und dann den Fahrer visuell zu der Nebenstraße führt und die visuelle Aktivität des Fahrers bestätigt, wenn der Fahrer die Nebenstraße visuell erkennt.

9. Zielführungssystem nach Anspruch 1, wobei das Bestätigungs-/ Sichtführungsmittel unterscheidet, ob der Fahrer die von der Zielführung bezeichnete Nebenstraße von der aktuellen Stelle des Fahrers aus erkennen kann, und falls der Fahrer dies nicht kann, die Sicht des Fahrers in die Richtung der Nebenstraße führt.

10. Zielführungssystem nach Anspruch 1, wobei das Bestätigungs-/ Sichtführungsmittel unterscheidet, ob der Fahrer die von der Zielführung bezeichnete Nebenstraße von der aktuellen Stelle des Fahrers aus erkennen kann, und falls der Fahrer dies nicht kann, den Fahrer über die Entfernung zu der Nebenstraße informiert und die Sicht des Fahrers in die Richtung der Nebenstraße führt.

11. Zielführungssystem nach Anspruch 1, wobei das Bestätigungs-/ Sichtführungsmittel unterscheidet, ob der Fahrer die von der Zielführung bezeichnete Nebenstraße von der aktuellen Stelle des Fahrers aus erkennen kann, und falls der Fahrer dies nicht kann, die Sichtlinie des Fahrers in die Richtung der Nebenstraße führt, um den Fahrer im voraus über die Nebenstraße zu benachrichtigen, und die Sicht des Fahrers an einer Stelle, wo die Nebenstraße visuell erkannt werden kann, zu der Nebenstraße führt.

12. Zielführungssystem nach einem der Ansprüche 1 bis 11, wobei das Bestätigungs-/ Sichtführungsmittel den Zeitpunkt der Sichtführung vorstellt, wenn die Vorwärtssicht relativ schlecht ist, wie etwa beim Fahren in der Nacht oder bei Regen.

13. Zielführungssystem nach einem der Ansprüche 1 bis 12, wobei das System weiterhin Sichtführungsabschaltmittel zum Abschalten der Sichtführung durch das Bestätigungs-/ Sichtführungsmittel umfaßt, wenn die Sicht des Fahrers außerhalb eines vorbestimmten Bereichs gerichtet ist.

14. Zielführungssystem nach Anspruch 1, wobei das Bestätigungs-/ Sichtführungsmittel den Fahrer unter Verwendung eines vor dem Fahrzeug gelegenen Sichtführungsreferenzobjekts als Referenz visuell führt, wenn die visuelle Aktivität des Fahrers falsch ist.

15. Zielführungssystem nach Anspruch 14, wobei das Sichtführungsreferenzobjekt eine Struktur ist und das Bestätigungs-/ Sichtführungsmittel bewirkt, daß der Fahrer die vor dem Fahrzeug liegende Struktur visuell erkennt, den Fahrer unter Verwendung der Struktur als Referenz visuell zu der durch die Zielführung bezeichneten Nebenstraße führt und weiter die visuelle Aktivität des Fahrers bestätigt, wenn der Fahrer die Nebenstraße visuell erkennt.

16. Zielführungssystem nach Anspruch 14, wobei das Sichtführungsreferenzobjekt mindestens ein Verkehrssignal ist und das Bestätigungs-/ Sichtführungsmittel die Sicht des Fahrers zu der Nebenstraße führt, die von der Zielführung bezeichnet ist, wobei die Anzahl von Verkehrssignalen von dem Fahrzeugort zu der Nebenstraße verwendet wird, und die visuelle Aktivität des Fahrers bestätigt, wenn der Fahrer die Nebenstraße visuell erkennt.

17. Zielführungssystem nach Anspruch 14, wobei das Sichtführungsreferenzobjekt ein weiteres vor dem Fahrzeug des Fahrers fahrendes Fahrzeug ist, wobei das System weiterhin eine Bilderkennungseinrichtung zum Erkennen von vor dem Fahrzeug befindlichen Objekten umfaßt und das Bestätigungs-/ Sichtführungsmittel bewirkt, daß der Fahrer das vorausfahrende andere Fahrzeug visuell erkennt, das von der Bilderkennungseinrichtung erkannt wurde, die Sichtlinie des Fahrers unter Verwendung des anderen Fahrzeugs als Referenz zu der durch die Zielführung bezeichneten Nebenstraße führt und weiterhin die visuelle Aktivität des Fahrers bestätigt, wenn der Fahrer die Nebenstraße visuell erkennt.

18. Zielführungssystem nach Anspruch 14, wobei das Sichtführungsreferenzobjekt ein Verkehrszeichen ist, das an der Straße installiert ist, auf der das Fahrzeug fährt, und das Bestätigungs-/Sichtführungsmittel bewirkt, daß der Fahrer das Verkehrszeichen visuell erkennt, die Sichtlinie des Fahrers unter Verwendung des Verkehrszeichens als Referenz zu der durch die Zielführung bezeichneten Nebenstraße führt und die visuelle Aktivität des Fahrers bestätigt, wenn der Fahrer die Nebenstraße visuell erkennt.

19. Zielführungssystem nach Anspruch 14, wobei das Sichtführungsreferenzobjekt ein auf die Fahrzeugwindschutzscheibe projizierter Sichtführungshinweis ist und das Bestätigungs-/ Sichtführungsmittel bewirkt, daß der Fahrer den Sichtführungshinweis visuell erkennt, die Sicht des Fahrers unter Verwendung des Sichtführungshinweises zu der durch die Zielführung bezeichneten Nebenstraße führt und die visuelle Aktivität des Fahrers bestätigt, wenn der Fahrer visuell den Sichtführungshinweis erkennt.

20. Zielführungssystem nach Anspruch 14, wobei das Bestätigungs-/ Sichtführungsmittel ein in einem Bereich in der Nähe der von der Zielführung bezeichneten Nebenstraße befindliches Objekt als das Sichtführungsreferenzobjekt abruft.

21. Zielführungssystem nach Anspruch 14, wobei das Bestätigungs-/ Sichtführungsmittel ein Sichtführungsreferenzobjekt abruft, das sich in einem Bereich eines vorbestimmten Abtastbereichs θ befindet, der auf der Straße zentriert ist, auf der das Fahrzeug fährt.

22. Zielführungssystem nach Anspruch 21, wobei das Bestätigungs-/ Sichtführungsmittel den Wert des vorbestimmten Abtastbereichs θ kleiner setzt, proportional dazu, wie die Entfernung zu der durch die Zielführung bezeichneten Nebenstraße länger ist, die Fahrzeugfahrbedingungen schlechter sind und das Fahrzeug größer ist oder sein Wenderadius kleiner ist.

23. Zielführungssystem nach Anspruch 14, wobei das Bestätigungs-/ Sichtführungsmittel die Sicht des Fahrers in die Richtung der durch die Zielführung bezeichneten Nebenstraße führt, wenn kein Sichtführungsreferenzobjekt spezifiziert werden kann.

24. Zielführungssystem nach Anspruch 14, wobei das Bestätigungs-/ Sichtführungsmittel die Sichtführung durch übertriebenes Anzeigen des Sichtführungsreferenzobjekts auf einem Display bereitstellt.

25. Zielführungssystem nach Anspruch 14, wobei das Bestätigungs-/ Sichtführungsmittel ein Sichtführungsreferenzobjekt auswählt, das sich visuell leicht erkennen läßt, wenn die Vorwärtssicht relativ schlecht ist, wie etwa beim Fahren in der Nacht oder bei Regen.

26. Zielführungssystem nach Anspruch 1, wobei das System weiterhin Korrekturmittel umfaßt, um unter vorbestimmten Bedingungen die Einzelheiten der Steuerung zum Ausführen der Sichtführung durch das Bestätigungs-/ Sichtführungsmittel zu korrigieren, um die Genauigkeit der Sichtführung zu verbessern.

27. Zielführungssystem nach Anspruch 26, wobei das Korrekturmittel den Zeitpunkt der Steuerung zum Ausführen der Sichtführung durch das Bestätigungs-/ Sichtführungsmittel in Proportion dazu vorstellt, wie die Reaktionszeitperiode zwischen der Sichtführung durch das Bestätigungs-/ Sichtführungsmittel und die visuelle Erkennungsantwort des Fahrers länger ist.

28. Zielführungssystem nach Anspruch 26, wobei das Korrekturmittel den Zeitpunkt der Steuerung zum Ausführen der Sichtführung durch das Bestätigungs-/ Sichtführungsmittel in einem Gebiet, das dem Fahrer nicht vertraut ist, mehr vorstellt, als in einem Gebiet, das dem Fahrer vertraut ist.

29. Zielführungsverfahren zum Führen eines Fahrzeugs entlang einer Strecke zu einem Ziel, wobei das Verfahren folgendes umfaßt:
- einen Zielsetzschritt zum Setzen eines Ziels;
- einen Visuelle-Aktivität-Unterscheidungsschritt zum Unterscheiden, ob die visuelle Aktivität eines Fahrers angesichts der Zielführung zu dem gesetzten Ziel richtig ist; und
- einen Bestätigungs-/ Sichtführungsschritt zum Bestätigen der visuellen Aktivität des Fahrers, wenn die visuelle Aktivität des Fahrers richtig ist, und Angeben einer Routenführung durch visuelles Führen des Fahrers, wenn die visuelle Aktivität des Fahrers falsch ist.

30. Zielführungsverfahren nach Anspruch 29, wobei das Bestätigungs-/ Sichtführungsmittel die visuelle Aktivität des Fahrers bestätigt, wenn der Fahrer visuell die von der Zielführung bezeichnete Nebenstraße erkennt, und, wenn der Fahrer nicht die von der Zielführung bezeichnete Nebenstraße erkennt, die Sicht des Fahrers zu der Nebenstraße führt, wobei das von dem Fahrer zu diesem Zeitpunkt visuell erkannte Objekt als Referenz verwendet wird.

31. Zielführungsverfahren nach Anspruch 29, wobei das Bestätigungs-/ Sichtführungsmittel den Fahrer unter Verwendung eines vor dem Fahrzeug gelegenen Sichtführungsreferenzobjekts als Referenz visuell führt, wenn die visuelle Aktivität des Fahrers falsch ist.

32. Zielführungsverfahren nach Anspruch 29, wobei das Verfahren weiterhin Korrekturmittel umfaßt, um unter vorbestimmten Bedingungen die Einzelheiten der Steuerung zum Ausführen der Sichtführung durch das Bestätigungs-/ Sichtführungsmittel zu korrigieren, um die Genauigkeit der Sichtführung zu verbessern.

33. Zielführungsprogramm zum Führen eines Fahrzeugs entlang einer Strecke zu einem Ziel, wobei das Programm einen Computer steuert, ein Ziel zu setzen, um zu unterscheiden, ob die visuelle Aktivität eines Fahrers angesichts der Zielführung zu dem gesetzten Ziel richtig ist, und die visuelle Aktivität des Fahrers zu bestätigen, wenn die visuelle Aktivität des Fahrers richtig ist, und Zielführung anzugeben durch visuelles Führen des Fahrers, wenn die visuelle Aktivität des Fahrers falsch ist.

34. Zielführungsprogramm nach Anspruch 33, wobei das Programm den Computer steuert, um die visuelle Aktivität eines Fahrers zu bestätigen, wenn der Fahrer die von der Zielführung bezeichnete Nebenstraße visuell erkennt, und wenn der Fahrer die von der Zielführung bezeichnete Nebenstraße nicht erkennt, den Computer steuert, die Sicht des Fahrers unter Verwendung des von dem Fahrer zu diesem Zeitpunkt visuell erkannten Objekts als Referenz zu der Nebenstraße zu führen.

35. Zielführungsprogramm nach Anspruch 33, wobei das Programm den Computer steuert, den Fahrer unter Verwendung eines vor dem Fahrzeug befindlichen Sichtführungsreferenzobjekts als Referenz visuell zu führen, wenn die visuelle Aktivität des Fahrers falsch ist.

36. Zielführungsprogramm nach Anspruch 33, wobei das Programm den Computer unter vorbestimmten Bedingungen steuert, die Einzelheiten der Steuerung zum Ausführen der Sichtführung zu korrigieren, um die Genauigkeit der Sichtführung zu verbessern.

## Revendications

1. Système de guidage routier pour guider un véhicule le long d'une route jusqu'à une destination, le système comprenant :
un moyen de réglage de destination pour régler une destination ;
un moyen de discrimination d'activité visuelle pour discriminer si l'activité visuelle d'un conducteur est correcte relativement au guidage routier jusqu'à la destination réglée ; et
un moyen de confirmation/guidage visuel pour confirmer l'activité visuelle du conducteur quand l'activité visuelle du conducteur est correcte et offrir un guidage routier en guidant visuellement le conducteur quand l'activité visuelle du conducteur est erronée.

2. Système de guidage routier selon la revendication 1, dans lequel le moyen de confirmation/guidage routier confirme l'activité visuelle du conducteur quand le conducteur reconnaît visuellement l'embranchement désigné par le guidage routier et, quand le conducteur ne reconnaît pas l'embranchement désigné par le guidage routier, guide la vision du conducteur vers l'embranchement en utilisant comme référence l'objet reconnu visuellement par le conducteur à ce moment-là.

3. Système de guidage routier selon la revendication 1, dans lequel, quand la distance depuis la position du véhicule jusqu'à l'embranchement désigné par le guidage routier est égale ou supérieure à une valeur prédéterminée représentant une longue distance, le moyen de confirmation/guidage visuel confirme l'activité visuelle du conducteur si le sens de la vision du conducteur coïncide essentiellement avec le sens de l'embranchement, et quand le sens de la vision du conducteur ne coïncide par avec le sens de l'embranchement, guide la vision du conducteur dans le sens de l'embranchement.

4. Système de guidage routier selon la revendication 1, dans lequel, quand la distance depuis la position du véhicule jusqu'à l'embranchement désigné par le guidage routier est égale ou supérieure à une valeur prédéterminée représentant une longue distance, le moyen de confirmation/guidage visuel confirme l'activité visuelle du conducteur si le sens de la vision du conducteur coïncide essentiellement avec le sens de l'embranchement, et quand le sens de la vision du conducteur ne coïncide par avec le sens de l'embranchement, informe le conducteur de la distance jusqu'à l'embranchement et guide la vision du conducteur dans le sens de l'embranchement.

5. Système de guidage routier selon l'une quelconque des revendications 1 à 4, dans lequel le moyen de confirmation/guidage visuel effectue la confirmation et le guidage routier par guidage vocal.

6. Système de guidage routier selon la revendication 1, dans lequel le moyen de confirmation/guidage visuel modifie les données du guidage visuel du conducteur durant la conduite conformément à un niveau de guidage visuel pour les conditions de conduite.

7. Système de guidage routier selon la revendication 6, dans lequel le moyen de confirmation/guidage visuel modifie l'objet de référence de guidage visuel servant de référence pour le guidage visuel du conducteur conformément au niveau de guidage visuel.

8. Système de guidage routier selon la revendication 1, dans lequel le moyen de confirmation/guidage visuel donne tout d'abord un guidage visuel concernant le sens de l'embranchement désigné par le guidage routier, puis guide visuellement le conducteur jusqu'à l'embranchement et confirme l'activité visuelle du conducteur si le conducteur reconnaît visuellement l'embranchement.

9. Système de guidage routier selon la revendication 1, dans lequel le moyen de confirmation/guidage visuel discrimine si le conducteur peut reconnaître visuellement l'embranchement désigné par le guidage routier à partir de la position actuelle du conducteur et si le conducteur ne le peut pas, guide la vision du conducteur dans le sens de l'embranchement.

10. Système de guidage routier selon la revendication 1, dans lequel le moyen de confirmation/guidage visuel discrimine si le conducteur peut reconnaître visuellement l'embranchement désigné par le guidage routier à partir de la position actuelle du conducteur et si le conducteur ne le peut pas, informe le conducteur de la distance jusqu'à l'embranchement et guide la vision du conducteur dans le sens de l'embranchement.

11. Système de guidage routier selon la revendication 1, dans lequel le moyen de confirmation/guidage visuel discrimine si le conducteur peut reconnaître visuellement l'embranchement désigné par le guidage routier à partir de la position actuelle du conducteur et si le conducteur ne le peut pas, guide l'axe visuel du conducteur dans le sens de l'embranchement afin de notifier à l'avance l'embranchement au conducteur et guide la vision du conducteur vers l'embranchement à une position où l'embranchement peut être reconnu visuellement.

12. Système de guidage routier selon l'une quelconque des revendications 1 à 11, dans lequel le moyen de confirmation/guidage visuel avance le point temporel du guidage routier quand la visibilité vers l'avant est relativement médiocre comme durant la conduite de nuit ou sous la pluie.

13. Système de guidage routier selon l'une quelconque des revendications 1 à 12, dans lequel le système comprend en outre un moyen de désactivation du guidage visuel pour désactiver le guidage visuel par le moyen de confirmation/guidage visuel quand la vision du conducteur est dirigée en dehors d'une gamme prédéterminée.

14. Système de guidage routier selon la revendication 1, dans lequel le moyen de confirmation/guidage visuel guide visuellement le conducteur en utilisant comme référence un objet de référence de guidage visuel situé devant le véhicule quand l'activité visuelle du conducteur est erronée.

15. Système de guidage routier selon la revendication 14, dans lequel l'objet de référence de guidage visuel est une structure, et le moyen de confirmation/guidage visuel force le conducteur à reconnaître visuellement la structure située devant le véhicule, guide visuellement le conducteur jusqu'à l'embranchement désigné par le guidage routier en utilisant comme référence la structure et confirme en outre l'activité visuelle du conducteur quand le conducteur reconnaît visuellement l'embranchement.

16. Système de guidage routier selon la revendication 14, dans lequel l'objet de référence de guidage visuel est au moins un feu de circulation, et le moyen de confirmation/guidage visuel guide la vision du conducteur vers l'embranchement désigné par le guidage routier en utilisant le nombre de feux de circulation depuis la position du véhicule jusqu'à l'embranchement et confirme l'activité visuelle du conducteur quand le conducteur reconnaît visuellement l'embranchement.

17. Système de guidage routier selon la revendication 14, dans lequel l'objet de référence de guidage visuel est un autre véhicule roulant devant le véhicule du conducteur, le système comprend en outre un dispositif de reconnaissance d'image pour reconnaître des objets situés devant le véhicule, et le moyen de confirmation/guidage visuel force le conducteur à reconnaître visuellement l'autre véhicule roulant devant lui qui a été reconnu par le dispositif de reconnaissance d'image, guide l'axe visuel du conducteur vers l'embranchement désigné par le guidage routier en utilisant comme référence l'autre véhicule, et confirme en outre l'activité visuelle du conducteur quand le conducteur reconnaît visuellement l'embranchement.

18. Système de guidage routier selon la revendication 14, dans lequel l'objet de référence de guidage visuel est un panneau de signalisation installé sur la route sur laquelle roule le véhicule, et le moyen de confirmation/guidage visuel force le conducteur à reconnaître visuellement le panneau de signalisation, guide la vision du conducteur vers l'embranchement désigné par le guidage routier en utilisant comme référence le panneau de signalisation, et confirme l'activité visuelle du conducteur quand le conducteur reconnaît visuellement l'embranchement.

19. Système de guidage routier selon la revendication 14, dans lequel l'objet de référence de guidage visuel est un repère de guidage visuel projeté sur le pare-brise du véhicule, et le moyen de confirmation/guidage visuel force le conducteur à reconnaître visuellement le repère de guidage visuel, guide la vision du conducteur vers l'embranchement désigné par le guidage routier en utilisant le repère de guidage visuel et confirme en outre l'activité visuelle du conducteur quand le conducteur reconnaît visuellement le repère de guidage visuel.

20. Système de guidage routier selon la revendication 14, dans lequel le moyen de confirmation/guidage visuel recouvre un objet situé dans une zone près de l'embranchement désigné par le guidage routier comme objet de référence de guidage visuel.

21. Système de guidage routier selon la revendication 14, dans lequel le moyen de confirmation/guidage visuel recouvre un objet de référence de guidage visuel situé dans une zone d'une portée prédéterminée θ centrée sur la route sur laquelle roule le véhicule.

22. Système de guidage routier selon la revendication 21, dans lequel le moyen de confirmation/guidage visuel règle la valeur de la portée prédéterminée θ à une valeur inférieure au fur à mesure que la distance jusqu'à l'embranchement désigné par le guidage routier augmente, que les conditions de conduite empirent, et selon que le véhicule est plus grand ou que son rayon de braquage est plus petit.

23. Système de guidage routier selon la revendication 14, dans lequel le moyen de confirmation/guidage visuel guide la vision du conducteur dans le sens de l'embranchement désigné par le guidage routier quand un objet de référence de guidage visuel ne peut pas être spécifié.

24. Système de guidage routier selon la revendication 14, dans lequel le moyen de confirmation/guidage visuel assure un guidage visuel en affichant exagérément l'objet de référence de guidage visuel sur un affichage.

25. Système de guidage routier selon la revendication 14, dans lequel le moyen de confirmation/guidage visuel sélectionne un objet de référence de guidage visuel qui est facile à reconnaître visuellement quand la visibilité vers l'avant est relativement médiocre, comme durant la conduite de nuit ou sous la pluie.

26. Système de guidage routier selon la revendication 1, dans lequel le système comprend en outre un moyen de correction pour corriger dans des conditions prédéterminées les données de la commande d'exécution du guidage visuel par le moyen de confirmation/guidage visuel, de façon à rehausser la précision du guidage visuel.

27. Système de guidage routier selon la revendication 26, dans lequel le moyen de correction avance le point temporel de la commande d'exécution du guidage visuel par le moyen de confirmation/guidage visuel au fur et à mesure que la période de temps de réaction entre le guidage visuel par le moyen de confirmation/guidage visuel et la réponse de reconnaissance visuelle du conducteur augmente.

28. Système de guidage routier selon la revendication 26, dans lequel le moyen de correction avance davantage le point temporel de la commande d'exécution du guidage visuel par le moyen de confirmation/guidage visuel dans une région inconnue du conducteur que dans une région connue du conducteur.

29. Procédé de guidage routier pour guider un véhicule le long d'une route jusqu'à une destination, le procédé comprenant :
une étape de réglage de destination pour régler une destination ;
une étape de discrimination d'activité visuelle pour discriminer si l'activité visuelle d'un conducteur est correcte relativement au guidage routier jusqu'à la destination réglée; et
une étape de confirmation/guidage visuel pour confirmer l'activité visuelle du conducteur quand l'activité visuelle du conducteur est correcte et offrir un guidage routier en guidant visuellement le conducteur quand l'activité visuelle du conducteur est erronée.

30. Procédé de guidage routier selon la revendication 29, dans lequel l'étape de confirmation/guidage routier confirme l'activité visuelle du conducteur quand le conducteur reconnaît visuellement l'embranchement désigné par le guidage routier et, quand le conducteur ne reconnaît pas l'embranchement désigné par le guidage routier, guide la vision du conducteur vers l'embranchement en utilisant comme référence l'objet reconnu visuellement par le conducteur à ce moment-là.

31. Procédé de guidage routier selon la revendication 29, dans lequel l'étape de confirmation/guidage visuel guide visuellement le conducteur en utilisant comme référence un objet de référence de guidage visuel situé devant le véhicule quand l'activité visuelle du conducteur est erronée.

32. Procédé de guidage routier selon la revendication 29, dans lequel le procédé comprend en outre une étape de correction pour corriger dans des conditions prédéterminées les données de la commande d'exécution du guidage visuel par l'étape de confirmation/guidage visuel, de façon à rehausser la précision du guidage visuel.

33. Programme de guidage routier pour guider un véhicule le long d'une route jusqu'à une destination, le programme commandant un ordinateur pour régler une destination, discriminer si l'activité visuelle d'un conducteur est correcte relativement au guidage routier jusqu'à la destination réglée, et confirmer l'activité visuelle du conducteur quand l'activité visuelle du conducteur est correcte et offrir un guidage routier en guidant visuellement le conducteur quand l'activité visuelle du conducteur est erronée.

34. Programme de guidage routier selon la revendication 33, dans lequel le programme commande l'ordinateur pour confirmer l'activité visuelle du conducteur quand le conducteur reconnaît visuellement l'embranchement désigné par le guidage routier et, quand le conducteur ne reconnaît pas l'embranchement désigné par le guidage routier, commande l'ordinateur pour guider la vision du conducteur vers l'embranchement en utilisant comme référence l'objet reconnu visuellement par le conducteur à ce moment-là.

35. Programme de guidage routier selon la revendication 33, dans lequel le programme commande l'ordinateur pour guider visuellement le conducteur en utilisant comme référence un objet de référence de guidage visuel situé devant le véhicule quand l'activité visuelle du conducteur est erronée.

36. Programme de guidage routier selon la revendication 33, dans lequel le procédé commande l'ordinateur dans des conditions prédéterminées afin de corriger les données de la commande d'exécution du guidage visuel de façon à rehausser la précision du guidage visuel.
